# EUROPEAN PATENT APPLICATION

(11) **EP 3 646 738 A1**
(43) Date of publication of application: **06.05.2020**
(21) Application number: 18822755.7
(22) Date of filing: 28.06.2018
(51) Int. Cl.: A23L 29/244, A23G 3/34, A23G 9/00

(54) **MOCHI-LIKE FOOD PRODUCT CONSISTING OF KUDZU STARCH AS MAIN INGREDIENT, ICE CONFECTIONERY, AND PRODUCTION METHOD FOR ICE CONFECTIONERY**

(30) Priority: 29.06.2017 JP 2017127932; 28.11.2017 JP 2017227301
(71) Applicant: Mash Up Co.,Ltd., Tokyo 150-0034 (JP)
(72) Inventor: MAENO Kinya, Tokyo 150-0034 (JP)
(74) Representative: Hoffmann Eitle
(86) International application number: PCT/JP2018/024747
(87) International publication number: WO 2019/004410

(57) **Abstract**

Provided are a mochi-like food product and an ice confection having a mochi-like texture under room temperature as well as a production method for an ice confection. A mochi-like food product according to one aspect of the present invention includes a starch gellant and a sweetener. The starch gellant contains kudzu starch serving as a main ingredient, and includes no potato starch, sweet potato starch, corn starch, or wheat starch. The sweetener at least includes wasanbon, includes no refined sugar, glucose, or synthetic sweeteners. The mochi-like food product can be frozen to be served as an ice confection. The mochi-like food product according to one aspect of the present invention can be provided as a tasty ice confection that has chewiness like uiro, is free of allergenicity, has a lower GI value than sugar, would not be too hard upon being frozen to be served as an ice confection, is easy to eat, and has unique thickness or gumminess.

## Description

### Field

The present invention relates to a mochi-like food product including kudzu starch as a main ingredient and having a mochi-like texture at room temperature, an ice confection made from this mochi-like food product, and a production method for the ice confection. More specifically, the present invention relates to a mochi-like food product including kudzu starch as a main ingredient and being edible not only as it is with a mochi-like texture at room temperature but also when frozen to be an ice confection as a tasty food product, the ice confection being capable of being eaten as a food product having a unique texture almost without melting or dripping even after being left at room temperature. The present invention also relates to such an ice confection and a production method for the ice confection.

### Background

Various mochi-like food products exhibiting a mochi-like texture under room temperature have conventionally been known. Such products include rice-flour dumplings, kudzu starch cake, uiro, raw yatsuhashi, and bracken-starch dumplings, as well as mochi. Among these, mochi is generally produced with glutinous rice serving as a raw material. Still, there are some types of mochi produced with potato starch added to glutinous rice. Kudzu starch cake, rice-flour dumplings, uiro, raw yatsuhashi, and bracken-starch dumplings are produced with some type of starch, corresponding to their materials, used as a gellant.

Examples of the gellant conventionally used include: refined rice flour made of starch of glutinous rice for rice-flour dumplings; glutinous rice powder or refined rice flour as well as non-glutinous rice flour and potato starch for raw yatsuhashi; non-glutinous rice flour, glutinous rice flour, or wheat flour for uiro; and bracken starch made of starch produced from bracken roots for bracken-starch dumplings. Kudzu starch cake was originally made from raw materials including starch made from kudzu roots. However, a mochi-like food product including kudzu powder (kudzu starch) containing only starch made from kudzu root would be too expensive. Thus, actually, the cake is currently rarely made with the original ingredient. Instead, those made from a mixture of kudzu powder and sweet potato starch or potato starch, made from sweet potato starch commercially known as standard kudzu, or made from fermented wheat starch as in the case of kudzumochi, for example, have been known.

In many cases, the mochi-like food products other than mochi are eaten at room temperature, whereas mochi is generally eaten in a heated state or at room temperature. Generally, the mochi-like food products have not been frozen to be an ice confection. This is because these mochi-like food products become too hard to be directly eaten when simply frozen. The mochi-like food products may be thawed after being frozen, but this results in a hard texture due to aging of starch. As used herein, the term "room temperature" means 20°C ± 15°C defined by JIS standard, unless stated otherwise. Products sold in the name of "kudzu powder" may include those with sweet potato starch and potato starch mixed in kudzu powder. Thus, in this specification, pure kudzu powder will be specifically referred to as "kudzu starch" as described later.

As disclosed in Patent Literature 1 (Japanese Patent No. 2804440) described below, an ice confection, such as kudzu ice cream, using kudzu powder as one of ice cream raw materials has been known. This kudzu ice cream is produced using raw materials containing milk, fresh cream, egg yolk, glucose, skimmed milk powder, and kudzu powder. Furthermore, Patent Literature 2 (Japanese Patent Application Publication No. 2010-252661) discloses a mochi-like ingredient that can be uniformly dispersed in ice confections and can still provide a mochi-like texture and flavor, and a method of producing a food product including the same.

### Citation List

### Patent Literature

Patent Literature 1: Japanese Patent No. 2804440
Patent Literature 2: Japanese Patent Application Publication No. 2010-252661

### Summary

### Technical Problem

The kudzu ice cream disclosed in Patent Literature 1 described above is producing by using kudzu powder instead of emulsion stabilizer used in conventional ice creams available on the market. This can largely improve the aftertaste without compromising texture on the tongue offered by conventional ice creams available on the market. Furthermore, the kudzu ice cream can be made by using raw materials that are all natural ingredients, and thus is superior to products not completely made of natural ingredients, in terms of safety to human bodies. However, the kudzu ice cream has ice cream like properties in a frozen state, but melts when the temperature rises, to be incapable of even maintaining the original shape.

According to the mochi-like ingredient disclosed in Patent Literature 2 described above, the mochi-like ingredient can be stored while being frozen and cooled without involving solidifying of mochi, so that the mochi-like texture can be maintained. However, alginic acid or sodium alginate and poorly soluble calcium salt is used as a gellant. This gellant is not a natural ingredient and thus tends to be avoided. Furthermore, with the mochi-like ingredient, mochi particles are uniformly dispersed in ice confections, and melt when the temperature rises to be incapable of even maintaining the shape, as in the case of the kudzu ice cream described above.

Thus, nothing has been known as a mochi-like food product including kudzu starch as a main raw material and being edible not only as it is with a mochi-like texture at room temperature but also when frozen to be an ice confection as a tasty food product, the ice confection being capable of being eaten as a food product having a unique texture almost without melting or dripping even after being left at room temperature.

Wheat starch, potato starch, and sweet potato starch, which can serve as a starch gellant among the production raw materials of a mochi-like food product, are known to have allergenicity. Furthermore, milk and egg used as raw materials for producing the kudzu ice cream described above are ingredients that could have allergenicity. In addition, a sweetener with low Glycemic Index (GI) value has been called for for the sake of healthy diet, that is, for regulating blood sugar rise. Sugar is a commonly used sweetener, but granulated sugar, white refined sugar, ice sugar, and soft brown sugar are all refined sugar and thus are sweeteners with a high GI value containing a small amount of minerals. Wasanbon, brown sugar, starch syrup, and coconut sugar feature a lower GI value than sugar, include a relatively large amount of mineral components, offer better palatability than sugar, and each has a unique flavor. Synthetic sweeteners feature an extremely low GI value, but are not natural raw materials and thus are not preferably used.

The inventors of the present invention have conducted various types of experiments to solve the problems involved in freezing mochi-like food products containing a conventional starch gellant. As a consequence, the inventors have found that using a starch gellant including kudzu starch as a main ingredient can produce a mochi-like food product being edible as it is with a mochi-like texture at room temperature and also when frozen to be an ice confection as a tasty food product, the ice confection being capable of being eaten as a food product having a unique texture almost without melting or dripping even after being left at room temperature, whereby they have developed the present invention. This phenomenon occurs presumably because the starch of kudzu itself is difficult to age compared with other types of starch.

Specifically, a first object of the present invention is to provide a mochi-like food product including kudzu starch as a main raw material and being edible as it is with a mochi-like texture at room temperature and also when frozen to be an ice confection as a tasty food product, the mochi-like food product containing no allergenic ingredient.

A second object of the present invention is to provide an ice confection produced by freezing the above-described mochi-like food product that can be eaten as a tasty food product with unique thickness, and can be eaten as a food product having a unique texture almost without melting or dripping even after being left at room temperature, and contains no allergenic ingredient, and to provide a maker kit for the ice confection and a production method for the ice confection.

A third object of the present invention is to provide an ice confection by adjusting a recipe using kudzu starch, as a tasty food product offering a rich taste and texture like Nama-chocolate (Japanese ganache) and being capable of being eaten as a food product having a unique texture almost without melting or dripping even after being left at room temperature.

### Solution to Problem

A mochi-like food product according to a first aspect of the present invention is a food product including a gellant and a sweetener, characterized in that the gellant contains kudzu starch as a main ingredient, but includes none of potato starch, sweet potato starch, corn starch, or wheat starch, and the sweetener includes at least a material that is not refined, but includes none of refined sugar, glucose, or synthetic sweeteners.

The term "kudzu starch" herein means starch made only from kudzu root (kudzu powder proportion: 100%) and does not include anything called kudzu starch if it contains other types of starch than starch made from kudzu root. The phrase "including kudzu starch as a main ingredient" herein means the proportion of kudzu starch is the highest among the components of the gellant. Thus, the mochi-like food product according to the first aspect is smooth, offers good palatability, can be obtained as a mochi-like food product with a texture similar to that of uiro, and thus can be directly eaten as a sweet and tasty food product. Furthermore, a food product with a unique texture, which is unable to be achieved with gellants other than kudzu starch (such as kudzu powder mixed with other types of starch, for example), can be provided.

Furthermore, the mochi-like food product according to the first aspect includes no refined sugar component (such as granulated sugar, white refined sugar, ice sugar, and soft brown sugar) or glucose, which is a sweetener with a health risk known to have a high GI value. Thus, a healthy mochi-like food product can not only prevent sharp postprandial blood sugar elevation but can also be sweet and yet be suitable for health oriented diet due to the absence of synthetic sweetener.

The mochi-like food product according to the first aspect may include, for example, at least one unrefined sweetener such as wasanbon, agave syrup, brown sugar, maple syrup, starch syrup, and coconut sugar. Among these, wasanbon is preferably used for a Japanese flavoring material for example, in terms of taste. Wasanbon features a lower GI value than refined sugar, and also contains mineral components. Thus, wasanbon can be used as a sweetener for Japanese mochi-like food product to provide a mochi-like food product with excellent sweetness. Agave syrup is preferably used for a fruit flavoring material for example. Note that the type of the sweetener is not particularly limited.

In the mochi-like food product according to the first aspect, the gellant contains kudzu starch as the main ingredient, but includes none of potato starch, sweet potato starch, or wheat starch. Potato starch, sweet potato starch, and wheat starch have allergenicity, whereas kudzu starch does not have allergenicity. Thus, the mochi-like food product according to the first aspect is safe. Furthermore, the mochi-like food product produced by using gellant with kudzu starch serving as the main ingredient can be frozen to be an ice confection without being too hard supposedly due to the slowly aging property of starch. Thus, an ice confection that is easy to eat and tasty can be obtained. Furthermore, this ice confection has unique thickness, and thus is easy to directly eat with good crunchiness.

Agar known as a gellant offers no mochi-like texture and is not even a starchy material. Gelatin is also not a starchy material, as in the case of agar, and even has allergenicity.

A mochi-like food product according to a second aspect of the present invention is characterized in that, in the mochi-like product according to the first aspect, the gellant contains only the kudzu starch, or includes the kudzu starch and at least one selected from lotus root powder, rice flour, and bracken starch mixed together.

When only kudzu starch is used as the gellant, a smooth and palatable mochi-like food product can be obtained. When this food product is eaten as an ice confection, some crispiness can be obtained and a texture depending on the mochi-like food product before being frozen can be obtained in response to the temperature rise in the mouth, whereby unique thickness can be provided. Furthermore, the ice confection left at room temperature does not collapse or drip and can be eaten as a mochi-like food product that is substantially the same as the one before being frozen.

When only kudzu starch is used as the gellant, a smooth and palatable mochi-like food product is obtained, but the product offers limited chewiness. On the other hand, when lotus root powder is mixed as the gellant, a mochi-like food product offering large chewiness is obtained. Thus, by mixing lotus root powder in kudzu starch, a tastier mochi-like food product can be obtained with that large chewiness obtained and with the smoothness and palatability provided by kudzu starch maintained. Since lotus root powder is free of allergenicity, addition of the lotus root powder would not compromise the allergenicity-free feature of kudzu starch. The proportion of lotus root powder to be added is lower than the proportion of the kudzu starch contained. This is because an excessively high proportion of lotus root powder leads to an excessively soft, deteriorated texture.

When rice flour is further mixed as the gellant, a mochi-like food product not only offering chewiness but also offering stickiness can be obtained. Furthermore, when lotus root powder and rice flour are mixed in kudzu starch, an even tastier mochi-like food product with larger chewiness than that made by only using kudzu starch as the gellant and further providing stickiness, while maintaining smoothness and palatability provided by kudzu starch, can be obtained. Since rice flour is free of allergenicity, like lotus root powder, addition of these components would not compromise the allergenicity-free feature of kudzu starch. Starch syrup is a component similar to rice flour in that it provides stickiness. Thus, the starch syrup may be added as the sweetener whereas the amount of rice flour added is partially reduced or zeroed, which can still achieve a similar level of stickiness. The starch syrup may also be added without changing the amount of rice flour added, whereby the stickiness can be adjusted. When bracken starch is further added as the gellant, a jelly-like texture can be additionally provided. Bracken starch is free of allergenicity.

The proportions of lotus root powder, rice flour, and bracken starch to be added are lower than the proportion of the kudzu starch contained. While a higher proportion of rice flour leads to a proportional increase in stickiness, in view of providing stickiness as well as providing chewiness, the proportions of lotus root powder, rice flour, and bracken starch to be added are preferably lower than the proportion of the kudzu starch contained. As the rice flour, fine rice flour made by crushing raw non-glutinous rice is preferably used. By making rice flour into fine powder, the powder is evenly mixed with other raw materials and is thus easily turned into gel.

A mochi-like food product according to a third aspect of the present invention is characterized in that, in the mochi-like food product according to the first or second aspect, a flavoring material is further added, the flavoring material including at least one or more of teas, Japanese cinnamon, cinnamon, fruit or vegetable juice, fruit or vegetable puree or paste, grain puree or paste, nuts, chocolate, coffee, rice milk, coconut water, coconut milk, coconut sugar, honey, liquor, sake, and fermented rice drink, and one or more of coconut sugar, honey, sake, and fermented rice drink in the flavoring material can also serve as a sweetener.

With the mochi-like food product according to the third aspect, a mochi-like food product having various types of flavors with unique thickness or stickiness can be obtained, the flavors including teas, yatsuhashi (Japanese cinnamon), cinnamon, various types of fruits and vegetables, nuts, chocolate, coffee, rice, coconut, coconut sugar, honey, liquor, sake, and fermented rice drink. As the fruit or vegetable juice, fresh juice can be used. When a flavoring material includes water, the amount of the flavoring material to be added is determined by taking the amount of water into consideration. Among the flavoring materials, at least one of coconut sugar, honey, sake, and fermented rice drink can serve as a sweetener, which can eliminate or reduce other sweeteners.

A mochi-like food product according to a fourth aspect of the present invention is characterized by including, in the mochi-like food product according to the first or second aspect, wafers on outer sides of the mochi-like food product.

With the mochi-like food product according to the fourth aspect, since the wafers are provided on the outer sides of the mochi-like food product, a mochi-like food product of a great design providing an appearance of Japanese sweets can be obtained. Furthermore, a tasty mochi-like food product with a good texture can be obtained with a synergy between a crisp texture of the wafers and the chewiness of the mochi-like food product.

An ice confection according to a fifth aspect of the present invention is an ice confection including a gellant and a sweetener. The gellant contains kudzu starch as a main ingredient, but includes none of potato starch, sweet potato starch, corn starch, or wheat starch. The sweetener includes at least a material that is not refined, but includes none of refined sugar, glucose, or synthetic sweeteners.

The ice confection according to the fifth aspect can be directly eaten as a tasty ice confection providing unique thickness with a texture depending on the mochi-like food product substantially before being frozen, when the temperature rises in the mouth. Furthermore, the ice confection left at room temperature does not collapse or drip and can be eaten as a mochi-like food product that is substantially the same as the one before being frozen. Furthermore, a food product with a unique texture, which is unable to be achieved with gellants other than kudzu starch (such as kudzu powder mixed with other types of starch, for example), can be provided. Furthermore, the ice confection is less likely to collapse or drip.

An ice confection according to a sixth aspect of the present invention is characterized in that, in the ice confection according to the fifth aspect, the gellant contains only the kudzu starch, or includes the kudzu starch and at least one selected from lotus root powder, rice flour, and bracken starch mixed together.

The ice confection according to the sixth aspect can be directly eaten as a tasty ice confection providing unique thickness together with some crispiness with a texture depending on the mochi-like food product substantially before being frozen, when the temperature rises in the mouth, if the gellant contains only the kudzu starch. Furthermore, the ice confection left at room temperature does not collapse or drip and can be eaten as a mochi-like food product that is substantially the same as the one before being frozen.

When at least one type of gellant selected from lotus root powder, rice flour, and bracken starch is mixed in kudzu starch, the resultant ice confection can be directly eaten as a tasty ice confection. With at least one type of gellant selected from lotus root powder, rice flour, and bracken starch mixed in kudzu starch, a texture including unique thickness provided by kudzu starch, as well as chewiness provided by lotus root powder and stickiness provided by rice flour can be felt in response to a temperature rise in the mouth. Furthermore, bracken starch may be added to increase crispiness. Furthermore, the ice confection left at room temperature does not collapse or drip and can be eaten as a mochi-like food product that is substantially the same as the one before being frozen. Since lotus root powder, rice flour, and bracken starch are free of allergenicity, addition of these components would not compromise the allergenicity-free feature of kudzu starch.

When lotus root powder alone is added to the kudzu starch to be mixed and used as the gellant, the proportion of lotus root powder is lower than the proportion of the kudzu starch contained. An excessively high proportion of lotus root powder leads to an excessively soft, deteriorated texture.

When lotus root powder and rice flour are mixed as the gellant, stickiness can be further felt compared with a case in which lotus root powder alone is mixed. Furthermore, the ice confection left at room temperature does not collapse or drip and can be eaten as a mochi-like food product that is substantially the same as the one before being frozen. When rice flour alone is added to the kudzu starch to be mixed and used as the gellant, the proportion of rice flour added is lower than the proportion of the kudzu starch contained.

When both lotus root powder and rice flour are added, their proportions are each lower than the proportion of the kudzu starch contained. A higher proportion of lotus root powder leads to a proportional increase in softness. Furthermore, in view of providing stickiness, the proportions of lotus root powder and rice flour to be added are adjusted as appropriate. As the rice flour, fine rice flour made by crushing raw non-glutinous rice is preferably used. Starch syrup is a component similar to rice flour in that it provides stickiness. Thus, the starch syrup may be added as the sweetener whereas the amount of rice flour added is partially reduced or zeroed, which can still achieve a similar level of stickiness. The starch syrup may also be added without changing the amount of rice flour added, whereby the stickiness can be adjusted. As the gellant, when bracken starch alone is added to the kudzu starch, or bracken starch as well as lotus root powder and rice flour is added to the kudzu starch, the proportions of lotus root powder, rice flour, and bracken starch to be added are lower than the proportion of the kudzu starch contained.

An ice confection according to a seventh aspect of the present invention is characterized in that, in the ice confection according to the fifth or sixth aspect, a flavoring material is further added, the flavoring material including at least one or more of teas, Japanese cinnamon, cinnamon, fruit or vegetable juice, fruit or vegetable puree or paste, grain puree or paste, nuts, chocolate, coffee, rice milk, coconut water, coconut milk, coconut sugar, honey, liquor, sake, and fermented rice drink, and one or more of coconut sugar, honey, sake, and fermented rice drink in the flavoring material can also serve as a sweetener.

With the ice confection according to the seventh aspect, an ice confection having various types of flavors can be obtained, the flavors including teas, yatsuhashi (Japanese cinnamon), cinnamon, various types of fruits and vegetables, nuts, chocolate, coffee, rice, coconut, coconut sugar, honey, liquor, sake, and fermented rice drink. Among the flavoring materials, at least one of coconut sugar, honey, sake, and fermented rice drink can serve as a sweetener, which can eliminate or reduce other sweeteners.

An ice confection according to an eighth aspect of the present invention is characterized in that, in the ice confection according to the tenth aspect, the flavoring material includes chocolate and at least one of rice milk, coconut water, coconut milk, and coconut sugar.

With the ice confection according to the eighth aspect of the present invention, a chocolate ice confection may include rice milk, so that the taste can have more depth, and may include coconut water or coconut milk, so that unique coconut flavor can be added, and thus can be provided as a tasty chocolate ice confection. This coconut water is juice from coconut. Coconut milk is obtained by adding fresh of coconut to the coconut juice, and stirring the resultant material using a mixer and the like. A coconut sugar flavor can be added by using coconut sugar. The coconut sugar is a sweetener obtained from flower honey collected from coconut flower or coconut flower bud. The coconut sugar features low GI and is rich of various types of nutrition.

An ice confection according to a ninth aspect of the present invention is characterized in that two or more ice confections having different tastes or textures are combined out of the ice confections according to any of the fifth to eighth aspects.

With the ice confection according to the ninth aspect, two or more different flavors or textures can be enjoyed with one ice confection. Thus, an ice confection one cannot get tired of eating due to changes in taste and/or texture can be provided. For example, an ice confection including chocolate serving as a flavoring material may be provided on a distal end side, and an ice confection including fruit as the flavoring material may be provided on a holding stick side. Thus, an ice confection includes the ice confection with a rich chocolate flavor on the distal end side and the ice confection with a fruit flavor having crispiness on the holding side, so that two types of flavors can be enjoyed. This structure can provide an ice confection one cannot get tired of eating despite the rich chocolate flavor, and also provides refreshing aftertaste due to the ice confection with the fruit flavor provided on the holding side to be eaten in the end.

An ice confection according to a tenth aspect of the present invention is characterized in that, in the ice confection according to any one of the fifth to ninth aspect, flavor adding powder is further added.

With the ice confection according to the tenth aspect, by further adding flavor adding powder to the ice confection to which the flavoring material is added, a taste with a richer flavor can be felt. The flavoring material and the flavor adding powder can be freely combined. Thus, an ice confection with a richer flavor can be obtained by a synergy between the flavoring material and the flavor adding powder combined. The flavor adding powder may be added in a material preparation stage before the freezing. Flavor adding powder of various flavors may be added to the ice confection seasoned by the sweetener with no flavoring material added, whereby an ice confection with a variety of tastes can be obtained. In a shop, after receiving an order from a customer, powder with a flavor he or she likes may be sprinkled on a sweet ice confection, so that a custom-made ice confection can be easily prepared on site. Flavor adding powder in a container may be sprinkled on the ice confection, so that the ice confection can be eaten with a more flavor-rich taste. A set of an ice confection and flavor adding powder in a container can be provided by a mobile shop.

An ice confection according to an eleventh aspect is characterized in that, in the ice confection according to any one of the fifth to tenth aspects, the ice confection has an overrun of 60% or more.

With the ice confection according to the eleventh aspect having an overrun of 60% or more, an ice confection with an airy texture like a soft-serve ice cream can be provided even when no milk component is included. This ice confection after being frozen and stored can be easily scooped by an ice disher and the like, to be served as an ice confection with an airy texture.

An ice confection according to a twelfth aspect of the present invention is characterized in that, in the ice confection according to the eleventh aspect, the ice confection is provided in at least one form selected from a soft-serve ice cream form, a popsicle form, an ice cream cup form, a wafer ice cream form, and a shaved ice form.

With the ice confection according to the twelfth aspect, the same ice confection can be provided in a desired form selected from a soft-serve ice cream form, a popsicle form, an ice cream cup form, a wafer ice cream form, and a shaved ice form. Having an overrun of 60% or more, an ice confection can be served in a soft-serve ice cream form. The ice confection can be served in a popsicle form, through a process of injecting and cooling the ice confection in a mold. The ice confection can be served in a cup ice cream form, by freezing and storing a container containing the ice confection. The ice confection can be served in a wafer ice cream form with the ice confection sandwiched by wafers. The ice confection can be served in a shaved ice form, by shaving the frozen ice confection using an ice shaver. Thus, ice confections served in various different forms can be produced by the same recipe and the same production process.

An ice confection according to a thirteenth aspect of the present invention is characterized in that, in the ice confection according to any one of the fifth to twelfth aspects, the ice confection is shaved.

With the ice confection according to the thirteenth aspect, the unique texture of shaved ice can be enjoyed. The ice confection melts in the mouth leaving a unique texture, and unique thickness can be felt due to the kudzu starch serving as the main ingredient. A device for producing a rectangular parallelepiped or cylindrical ice confection and an ice shaver for shaving this ice confection are widely commercially available. Thus, rectangular parallelepiped or cylindrical ice confections, as well as shaved ice can be produced at low cost. The texture can be varied depending on the shaving thickness.

The shaved ice confection may be in an elongated bar form (cylindrical or rectangular columnar shape) or in a small (bite size) rock or cube form. Such an ice confection requires no holding stick, but can also be provided with a holding stick while being dividable into ice confections with a rock or cube form. With a dedicated ice shaver that can shave an ice confection with a holding stick, shaved ice can be made by simply putting the ice confection with a holding stick into the dedicated ice shaver. The ice confection in an elongated bar form may be divided into ice confections with a rock or cube form. The ice confection in an elongated bar form may be notched to be easily divided along the notch to be the ice confections with a rock or cube form. The ice confection in a bar form and the ice confections with a rock or cube form have a relatively small size and thus a compact ice shaver can be used. Examples of such a compact ice shaver include a manual or electrical ice shaver for household or commercial use, or a manual or electrical, handy ice shaver. In particular, when the handy electrical ice shaver is used, shaved ice can be easily made in homes and shops. For example, the shaved ice obtained by the ice shaver can be directly used as a topping on food such as pancakes and waffles.

An ice confection according to a fourteenth aspect of the present invention is characterized in that, in the ice confection according to the thirteenth aspect, a plurality of types of ice confections to which different flavoring materials are added are mixed.

With the ice confection according to the fourteenth aspect, for example, with an ice confection in an elongated bar form (cylindrical or rectangular columnar shape) or ice confections in a small (bite size) rock or cube form, shaved ice can be made with a plurality of types of ice confections put in and mixed in the ice shaver. In such a case, tastes of a plurality of types of ice confections can be freely combined, whereby various combinations among tastes can be implemented. For example, a combination can be freely decided such as a combination among tastes of chocolate, matcha, and strawberry. Thus, seasoning can be implemented with elaborated combinations of the tastes, whereby various different tastes different from an ice confection of a singular form with a single taste can be achieved.

An ice confection according to a fifteenth aspect of the present invention is characterized in that, in the ice confection according to the thirteenth or fourteenth aspect, the ice confection is additionally cooled in a refrigerator.

With the ice confection according to the fifteenth aspect, a shaved ice confection providing a plurality of different types of textures in the mouth can be achieved, that is, the following textures can be felt:
(1) a crispy rice cracker-like texture that gives hard crunchiness;
(2) a texture softening in the mouth; and
(3) a texture providing unique thickness as the confectionary dissolves in about three seconds in the mouth.

An ice confection according to a sixteenth aspect of the present invention is characterized in that, in the ice confection according to any one of the thirteenth to fifteenth aspects, flavor adding powder is added to the shaved ice confection.

With the ice confection according to the sixteenth aspect, flavor adding powder with various flavors may be sprinkled on the shaved ice, so that a taste with a richer flavor can be felt. The flavoring material and the flavor adding powder can be freely combined. Thus, an ice confection with a richer flavor can be obtained by synergy between the flavoring material and the flavor adding powder combined.

An ice confection according to a seventeenth aspect of the present invention is characterized by including, in the ice confection according to any one of the fifth to twelfth aspects, a holding stick made of green bamboo.

With the ice confection according to the seventeenth aspect, with the holding stick inserted, an easy-to-eat popsicle can be achieved. Furthermore, the holding stick is made of green bamboo whose bright green color looks vivid, making the appearance of the ice confection (popsicle) better. While green bamboo oxidizes to be whitened if it is stored at room temperature after being cut, using green bamboo as a holding stick means the green bamboo is frozen and stored together with the popsicle and thus can be maintained to have fresh green color. The green bamboo stick maintaining its fresh green color proves that the popsicle has not been kept at room temperature.

An ice confection according to an eighteenth aspect of the present invention is characterized by including, in the ice confection according to any one of the fifth to seventeenth aspect, wafers on outer sides of the ice confection.

With the ice confection according to the eighteenth aspect, since the wafers are provided on the outer sides of the ice confection, an ice confection of a great design providing an appearance of Japanese sweets can be obtained. Furthermore, a tasty ice confection with a good texture can be obtained with a synergy between a crisp texture of the wafers and the unique thickness obtained by using the kudzu starch. When the ice confection is eaten, the first thing that comes into contact with the mouth is the wafers, meaning that the chilliness of the ice confection is not directly conveyed to the mouth. Thus, unique chilliness can be felt, which would be felt when eating a chilled Japanese confection and which is not offered by conventional ice confections.

An ice confection maker kit according to a nineteenth aspect of the present invention is an ice confection maker kit including materials and a utensil for producing the ice confection according to any one of the fifth to eighteenth aspects, and includes at least a gellant containing the kudzu starch as the main ingredient, the sweetener, and a popsicle mold.

With the ice confection according to the nineteenth aspect, a kudzu starch ice confection can be easily made at home. Such a maker kit is also a good souvenir.

A production method for an ice confection according to a twentieth aspect of the present invention includes the following steps (1) to (4):
(1) a step of preparing an aqueous solution by dispersing a gellant and a sweetener in water, the gellant including kudzu starch as a main ingredient but including none of potato starch, sweet potato starch, corn starch, or wheat starch, the sweetener including at least a material that is not refined but including none of refined sugar, glucose, or synthetic sweeteners;
(2) a step of heating the aqueous solution while stirring it;
(3) a step of injecting the aqueous solution obtained in step (2) into a mold with a predetermined shape; and
(4) a step of refrigerating and freezing the gelatinous body injected in the mold, with a refrigerant circulating around the mold.

A production method for an ice confection according to a twenty-first aspect of the present invention is characterized in that in the production method for an ice confection according to the twentieth aspect, in step (2), the aqueous solution is turned into gel.

A production method for an ice confection according to a twenty-second aspect of the present invention is characterized in that, in the production method for an ice confection according to the twentieth or twenty-first aspect, as the gellant, the kudzu starch alone is used, or the kudzu starch and at least one selected from lotus root powder, rice flour, and bracken starch are mixed together and used.

With the production method for an ice confection according to the twentieth to twenty-second aspects, an ice confection can be produced that achieves the same advantageous effects as those of the fifth and sixth aspects of the present invention. Starch serving as the gellant is aged and hardened when its temperature falls within a range of 5 to 0°C in the freezing process. In view of this, for example, the gelatinous body in the mold may be frozen using alcohol cooled by liquid nitrogen at extremely low temperature, so that efficient cooling can be achieved, and the temperature can quickly pass through the range of 5 to 0°C. Thus, starch does not age so much, whereby an ice confection that has unique thickness, is easy to eat directly, and gives good crunchiness can be produced if the temperature is maintained at a level suitable for ice confections. Depending on the proportion of the gellant, as with the production method for an ice confection according to the twenty-first aspect, the aqueous solution can be turned into gel in step (2), and thus the ice confection left at room temperature does not collapse or drip and can be eaten as a mochi-like food product that is substantially the same as the one before being frozen. The composition using kudzu starch as the main ingredient can provide an ice confection with a unique texture, which is unable to be achieved with gellants other than kudzu starch (such as kudzu powder mixed with other types of starch, for example) and with a risk of collapsing or dripping effectively reduced.

A production method for an ice confection according to a twenty-third aspect of the present invention is characterized in that, in the production method for an ice confection according to any one of the twentieth to twenty-second aspects, step (4) is performed while applying a high frequency electrical field to the aqueous solution in the mold.

With the production method for an ice confection according to the twenty-third aspect, an ice confection with more flavor as well as smooth and mild tastes can be obtained with the application of the high frequency electrical field in the freezing process leading to vibrations of molecules constituting the gelatinous body, resulting in a change in taste. The high frequency electrical field in a long wavelength range equal to or less than 150 kHz can increase absorption of high frequencies in the gelatinous body in the freezing process, resulting in minute vibrations of the molecules constituting the gelatinous body. Thus, an ice confection with even a smoother taste can be obtained.

A production method for an ice confection according to a twenty-fourth aspect of the present invention is characterized by further including, in the production method for an ice confection according to any one of the twentieth to twenty-third aspects, a step of mixing a flavoring material in the aqueous solution in step (2), the flavoring material including at least one or more of teas, Japanese cinnamon, cinnamon, fruit or vegetable juice, fruit or vegetable puree or paste, grain puree or paste, nuts, chocolate, coffee, rice milk, coconut water, coconut milk, coconut sugar, honey, liquor, sake, and fermented rice drink, and one or more of coconut sugar, honey, sake, and fermented rice drink in the flavoring material can also serve as a sweetener.

With the production method for an ice confection according to the twenty-fourth aspect, an ice confection having various types of flavors can be produced, the flavors including teas, yatsuhashi (Japanese cinnamon), cinnamon, various types of fruits and vegetables, nuts, chocolate, coffee, rice, coconut, coconut sugar, honey, liquor, sake, and fermented rice drink. Among the flavoring materials, at least one of coconut sugar, honey, sake, and fermented rice drink can serve as a sweetener, which can eliminate or reduce other sweeteners.

A production method for an ice confection according to a twenty-fifth aspect of the present invention is characterized in that, in the production method for an ice confection according to the twenty-fourth aspect, the flavoring material includes chocolate and at least one of rice milk, coconut water, coconut milk, and coconut sugar.

With the production method for an ice confection according to the twenty-fifth aspect, a chocolate ice confection may include rice milk, so that the taste can have more depth, and may include coconut water or coconut milk, so that unique coconut flavor can be added, and thus can be provided as a tasty chocolate ice confection. A coconut sugar flavor can be provided when coconut sugar is added.

A production method for an ice confection according to a twenty-sixth aspect of the present invention is characterized in that, in the production method for an ice confection according to any one of the twentieth to twenty-fifth aspect, two or more ice confections having different tastes or textures are combined, with steps (3) and (4) sequentially repeated for the number of times corresponding to the number of types of the ice confection obtained by the combination.

With the ice confection according to the twenty-sixth aspect, two or more different flavors or textures can be tasted in one ice confection. Thus, an ice confection one cannot get tired of eating due to changes in taste and/or texture can be provided.

A production method for an ice confection according to a twenty-seventh aspect of the present invention is characterized in that, in the production method for an ice confection according to any one of the twentieth to twenty-sixth aspects, an ice confection includes an ice confection including chocolate serving as a flavoring material on a distal end side, and an ice confection including a fruit serving as the flavoring material on a holding stick side. In the method, first, steps (3) and (4) are performed on a gelatinous body including chocolate serving as a flavoring material. Then, steps (3) and (4) are performed on a gelatinous body including a fruit serving as a flavoring material.

With the production method for an ice confection according to the twenty-seventh aspect, the ice confection having an ice confection including chocolate serving as a flavoring material on a distal end side, and an ice confection including a fruit serving as the flavoring material on a holding stick side can be obtained. Thus, an ice confection includes the ice confection with a rich chocolate flavor on the distal end side and the ice confection with a fruit flavor having crispiness on the holding side, so that two types of flavors can be enjoyed. This structure can provide an ice confection one cannot get tired of eating despite the rich chocolate flavor, and also provides refreshing aftertaste due to the ice confection with the fruit flavor provided on the holding side to be eaten in the end, when the ice confection starts to be eaten from the distal end side.

A production method for an ice confection according to a twenty-eighth aspect of the present invention is characterized by further including, in the production method for an ice confection according to any one of the twentieth to twenty-seventh aspects, after step (3), a step of inserting a holding stick made of green bamboo in a gelatinous body injected in the mold.

With the production method for an ice confection according to the twenty-eighth aspect of the present invention, with the holding stick inserted, an easy-to-eat popsicle can be produced. Furthermore, the holding stick is made of green bamboo whose bright green color looks vivid, making the appearance of the ice confection (popsicle) better. While green bamboo oxidizes to be whitened if it is stored at room temperature after being cut, using green bamboo as a holding stick means the green bamboo is frozen and stored together with the popsicle and thus can be maintained to have fresh green color. The green bamboo stick maintaining its fresh green color proves that the popsicle has not been kept at room temperature.

A production method for an ice confection according to a twenty-ninth aspect of the present invention is characterized by further including, in the production method for an ice confection according to any one of the twentieth to twenty-eighth aspects, (5) a step of shaving the ice confection obtained in step (4).

With the production method for an ice confection according to the twenty-ninth aspect, a shaved ice confection with a unique texture can be produced. A device for producing a rectangular parallelepiped or cylindrical ice confection and an ice shaver for shaving this ice confection are widely commercially available. Thus, rectangular parallelepiped and cylindrical ice confections, as well as shaved ice can be produced at low cost. The texture can be varied depending on the shaving thickness.

A production method for an ice confection according to a thirtieth aspect of the present invention is characterized in that, in the production method for an ice confection according to the twenty-ninth aspect, the shaved ice confection is any one of
(a) an elongated ice confection with a substantially cylindrical or substantially rectangular columnar shape, and with no holding stick,
(b) an elongated ice confection with a substantially cylindrical or substantially rectangular columnar shape, and with a holding stick,
(c) an ice confection in a rock or cube form, and
(d) ice confections in a rock or cube form obtained by splitting the ice confection (a) or (b).

With the production method for an ice confection according to the thirtieth aspect, for example, the shaved ice confection may be in an elongated bar form (cylindrical or rectangular columnar shape) or in a small (bite size) rock or cube form. The ice confection in an elongated bar form may be divided into ice confections with a rock or cube form. Such an ice confection requires no holding stick, but can also be provided with a holding stick while being dividable into ice confections with a rock or cube form.

With a dedicated ice shaver that can shave an ice confection with a holding stick, shaved ice can be made by simply putting the ice confection with a holding stick into the dedicated ice shaver. For example, the dedicated ice shaver may be obtained by replacing an attachment serving as a shaving blade of the handy ice shaver with an attachment with a hole through which a portion of the holding stick can pass, so that the ice confection with a holding stick can be directly shaved. The replacement of the attachment serving as the shaving blade is not limited to the handy device and may be applied to various types of manual or electrical ice shavers.

A production method for an ice confection according to a thirty-first aspect of the present invention is characterized in that, in the production method for an ice confection according to the thirtieth aspect, in (d), the elongated ice confection with a substantially cylindrical or substantially rectangular columnar shape in (a) or (b) is notched, and the ice confection is divided along the notch to be in a rock or cube form.

With the production method for an ice confection according to the thirty-first aspect, the ice confection in an elongated bar form that is notched can be divided along the notch to easily make ice confections with a rock or cube form.

A production method for an ice confection according to a thirty-second aspect of the present invention is characterized in that, in the production method for an ice confection according to any one of the twenty-ninth to thirty-first aspects, a manual or electrical ice shaver, or a manual or electrical, handy ice shaver are used for shaving the ice confection.

With the production method for an ice confection according to the thirty-second aspect, the ice confection in a bar form and the ice confections with a rock or cube form have a relatively small size and thus a compact ice shaver can be used. Examples of such a compact ice shaver include a manual or electrical ice shaver for household or commercial use, and a manual or electrical, handy ice shaver. In particular, when the handy electrical ice shaver is used, shaved ice can be easily made in homes and shops. For example, the shaved ice obtained by the ice shaver can be directly used as a topping on food such as pancakes and waffles.

A production method for an ice confection according to a thirty-third aspect of the present invention is characterized in that, in the production method for an ice confection according to the thirty-second aspect, an ice confection with a plurality of types of flavors combined is produced by putting a plurality of types of ice confections to which different flavoring materials are added in the ice shaver.

With the production method for an ice confection according to the thirty-third aspect, for example, with an ice confection in an elongated bar form (cylindrical or rectangular columnar shape) or ice confections in a small (bite size) rock or cube form, shaved ice can be made with a plurality of types of ice confections put in and mixed in the ice shaver. In such a case, tastes of a plurality of types of ice confections can be freely combined, whereby various combinations among tastes can be implemented. For example, a combination can be freely decided such as a combination among tastes of chocolate, matcha, and strawberry. Seasoning can be implemented with elaborated combinations of the tastes, whereby various different tastes different from an ice confection of a singular form with a single taste can be achieved.

A production method for an ice confection according to a thirty-fourth aspect of the present invention is characterized by including, in the production method for an ice confection according to any one of the twenty-ninth to thirty-third aspects, (6) a step of additionally cooling the ice confection obtained in step (5) in a refrigerator.

With the production method for an ice confection according to the thirty-fourth aspect, a shaved ice confection providing a plurality of different types of textures in the mouth can be produced, that is, the following textures can be enjoyed:
(1) a crispy rice cracker-like texture that gives hard crunchiness;
(2) a texture softening in the mouth; and
(3) a texture providing unique thickness as the confectionary dissolves in about three seconds in the mouth.

A production method for an ice confection according to a thirty-fifth aspect of the present invention includes the following steps (1) to (3):
(1) a step of preparing an aqueous solution by dispersing a gellant and a sweetener in water, the gellant including kudzu starch as a main ingredient but including none of potato starch, sweet potato starch, corn starch, or wheat starch, the sweetener including at least a material that is not refined but including none of refined sugar, glucose, or synthetic sweeteners;
(2) a step of heating the aqueous solution while stirring it; and
(3) a step of cooling the aqueous solution obtained in step (2) such that the aqueous solution contains air in a refrigerator.

In the production method for an ice confection according to the thirty-fifth aspect, by using the gellant including kudzu starch as the main ingredient, but including none of potato starch, sweet potato starch, corn starch, or wheat starch, cooling the aqueous solution obtained in step (2) such that the aqueous solution contains air in a refrigerator can provide an ice confection having soft-serve ice cream like, a unique airy texture and unique thickness without adding any milk component. Including kudzu starch as the main ingredient can provide an ice confection having a unique airy texture and unique thickness, which is unable to be achieved with gellants other than kudzu starch (such as kudzu powder mixed with other types of starch, for example).

In a production method for an ice confection according to a thirty-sixth aspect of the present invention is characterized in that, in the production method for an ice confection according to the thirty-fifth aspect, the aqueous solution is turned into gel in step (2).

With production method for an ice confection according to the thirty-sixth aspect, by turning the aqueous solution into gel in step (2), a unique airy texture and unique thickness can be adjusted depending on the level of gelation.

A production method for an ice confection according to a thirty-seventh aspect of the present invention is characterized in that, in the production method for an ice confection according to the thirty-fifth or thirty-sixth aspect, as the gellant, the kudzu starch alone is used, or the kudzu starch and at least one selected from lotus root powder, rice flour, and bracken starch are mixed and used.

With the production method for an ice confection according to the thirty-seventh aspect, if the gellant contains only the kudzu starch, unique thickness can be provided in addition to a unique airy texture. If the gellant is obtained by mixing at least one selected from lotus root powder, rice flour, and bracken starch with the kudzu starch, a texture with chewiness due to the lotus root powder and/or stickiness due to the rice flour in addition to the unique airy texture can be felt. Furthermore, adding bracken starch can increase a gelato-like texture. Since lotus root powder, rice flour, and bracken starch are free of allergenicity, addition of these components would not compromise the allergenicity-free feature of kudzu starch. Thus, an ice confection with a soft-serve ice cream-like airy texture can be provided without adding any milk component.

A production method for an ice confection according to a thirty-eighth aspect of the present invention is characterized in that, in the production method for an ice confection according to any one of the thirty-fifth to thirty-seventh aspects, step (3) is performed while applying a high frequency electrical field to the aqueous solution in the mold.

With the production method for an ice confection according to the thirty-eighth aspect, an ice confection with more flavor as well as smooth and mild tastes can be obtained with the application of the high frequency electrical field in the freezing process leading to vibrations of molecules constituting the gelatinous body, resulting in a change in taste. The high frequency electrical field in a long wavelength range equal to or less than 150 kHz can increase absorption of high frequencies in the gelatinous body in the freezing process, resulting in minute vibrations of the molecules constituting the gelatinous body. Thus, an ice confection with even a smoother taste can be obtained.

A production method for an ice confection according to a thirty-ninth aspect of the present invention is characterized by further including, in the production method for an ice confection according to any one of the thirty-fifth to thirty-eighth aspects, a step of mixing a flavoring material in the aqueous solution in step (2), the flavoring material including at least one or more of teas, Japanese cinnamon, cinnamon, fruit or vegetable juice, fruit or vegetable puree or paste, grain puree or paste, nuts, chocolate, coffee, rice milk, coconut water, coconut milk, coconut sugar, honey, liquor, sake, and fermented rice drink, and one or more of coconut sugar, honey, sake, and fermented rice drink in the flavoring material can also serve as a sweetener.

With the production method for an ice confection according to the thirty-ninth aspect, an ice confection having various types of flavors can be produced, the flavors including teas, yatsuhashi (Japanese cinnamon), cinnamon, various types of fruits and vegetables, nuts, chocolate, coffee, rice, coconut, coconut sugar, honey, liquor, sake, and fermented rice drink. Among the flavoring materials, at least one of coconut sugar, honey, sake, and fermented rice drink can serve as a sweetener, which can eliminate or reduce other sweeteners.

A production method for an ice confection according to a fortieth aspect of the present invention is characterized in that, in the production method for an ice confection according to the thirty-ninth aspect, the flavoring material includes chocolate and at least one of rice milk, coconut water, coconut milk, and coconut sugar.

With the production method for a chocolate ice confection according to the fortieth aspect, a chocolate ice confection may include rice milk, so that the taste can have more depth, and may include coconut water or coconut milk, so that unique coconut flavor can be added, and thus can be provided as a tasty chocolate ice confection. A coconut sugar flavor can be added by using coconut sugar.

A production method for an ice confection according to a forty-first aspect of the present invention is characterized in that, in the production method for an ice confection according to any one of the thirty-fifth to fortieth aspects, the ice confection has an overrun of 60% or more in step (3).

With the production method for an ice confection according to the forty-first aspect with an overrun of 60% or more, an ice confection having a soft-serve ice cream like airy texture can be provided without adding any milk component. This ice confection after being frozen and stored can be easily scooped by an ice disher and the like, to be served as an ice confection with an airy texture.

A production method for an ice confection according to a forty-second aspect of the present invention is characterized in that, in the production method for an ice confection according to any one of the thirty-fifth to forty-first aspects, the ice confection obtained in step (3) is provided in at least one form selected from a soft-serve ice cream form, a popsicle form, an ice cream cup form, a wafer ice cream form, and a shaved ice form.

With the production method for an ice confection according to the forty-second aspect, the same ice confection can be provided in a desired form selected from a soft-serve ice cream form, a popsicle form, an ice cream cup form, a wafer ice cream form, and a shaved ice form. Having an overrun of 60% or more, an ice confection can be served in a soft-serve ice cream form. The ice confection can also be served in a popsicle form, through a process of injecting and cooling the ice confection in a mold. The ice confection can also be served in a cup ice cream form, by freezing and storing a container containing the ice confection. The ice confection can also be served in a wafer ice cream form with the ice confection sandwiched by wafers. The ice confection can be served in a shaved ice form, by shaving the frozen ice confection using an ice shaver. Thus, ice confections served in various different forms can be produced by the same recipe and the same production process.

A production method for an ice confection according to a forty-third aspect of the present invention is characterized in that, in the production method for an ice confection according to any one of the twentieth and forty-second aspects, at least one type of flavor adding powder is further added, selected from a plurality of types.

With the production method for an ice confection according to the forty-third aspect, by further adding flavor adding powder to the ice confection to which the flavoring material is added, so that a taste with a richer flavor can be felt. The flavoring material and the flavor adding powder can be freely combined. Thus, an ice confection with a richer flavor can be obtained by a synergy between the flavoring material and the flavor adding powder combined. The flavor adding powder may be added in a material preparation stage before the freezing. Flavor adding powder of various flavors may be added afterwards to the ice confection with no flavoring material added, whereby an ice confection with a variety of tastes can be obtained. Flavor adding powder in a container may be sprinkled on the ice confection, so that the ice confection can be eaten with a more flavor-rich taste. A set of an ice confection and flavor adding powder in a container can be provided by a mobile shop. In a shop, after receiving an order from a customer, powder with a flavor he or she likes may be sprinkled on a sweet ice confection, so that a custom-made ice confection can be easily prepared on site.

A production method for an ice confection according to a forty-fourth aspect of the present invention is characterized in that, in the production method for an ice confection according to any one of the twentieth to forty-third aspects, wafers are provided on outer sides of the ice confection.

With the production method for an ice confection according to the forty-fourth aspect, since the wafers are provided on the outer sides of the ice confection, an ice confection of a great design providing an appearance of Japanese sweets can be produced. Furthermore, a tasty ice confection with a good texture can be produced with a synergy between a crisp texture of the wafers and the unique thickness obtained by using the kudzu starch. When the ice confection is eaten, the first thing that comes into contact with the mouth is the wafers, meaning that the chilliness of the ice confection is not directly conveyed to the mouth. Thus, unique chilliness can be felt, which would be felt when eating a chilled Japanese confection and which is not offered by conventional ice confections.

### Advantageous Effects of Invention

As described above, the present invention provides a mochi-like food product with a mochi-like texture being edible as it is at room temperature and also when frozen to be an ice confection as a tasty food product, containing no allergenic ingredient, and having a low GI value. In addition, the present invention provides an ice confection, an ice confection maker kit, and a production method for an ice confection. The ice confection when frozen has unique thickness or gumminess, can be eaten as a tasty food product with good crunchiness and as a food product having a unique texture almost without melting or dripping even after being left at room temperature for a predetermined period of time, contains no allergenic ingredient, and has a low GI value.

### Brief Description of Drawings

FIG. 1 is a conceptual diagram of a refrigerator used in experimental examples.
FIG. 2 is a perspective view of a cylindrical ice confection produced in Experimental Example 12.
FIG. 3 is a perspective view illustrating the ice confection illustrated in FIG. 2 cut into a plate form.

### Description of Embodiments

The following describes various types of experimental examples of a mochi-like food product, an ice confection made from this mochi-like food product, and a production method for the ice confection according to the present invention. It should be noted that various types of experimental examples described below are given by way of example to show examples for embodying the technical concept of the present invention, and are not intended to limit the present invention to these experimental examples. The present invention is equally applicable to other experimental examples that are included in the scope of the appended claims.

[First Embodiment] Experimental Examples 1 to 23 are described in a first embodiment.

[Experimental Examples 1 to 4] In Experimental Examples 1 to 4, four types of mochi-like food products having a mochi-like texture at room temperature were produced. First of all, commercially available Yoshino-hon kudzu (registered trademark) starch was used as kudzu starch serving as a starch gellant. Yoshino kudzu starch made by Kurokawa-Honke was used. Lotus root powder and wasanbon both made in Tokushima Prefecture were used. Commercially available fine rice flour made by crushing raw non-glutinous rice was used.

In Experimental Example 1, a proper amount of wasanbon, 3 parts by mass of kudzu starch, 8 parts by mass of lotus root powder were added to 100 parts by mass of water in a container. Then, the resultant material was well stirred and mixed so that the kudzu starch and the lotus root powder were dispersed in the water and the wasanbon was completely dissolved in the water. Next, the container was heated up to 80°C or more with medium flame while stirring the mixture. The mixture in the container started to solidify and had its transparency increased, upon reaching a temperature around 70°C. When the mixture in the container started to solidify, strength of the stirring was sharply increased so that the mixture in the container turned into a uniform gelatinous body. This heating process can also serve as a sterilization process. The maximum heating temperature is preferably 90°C or lower to prevent the mixture from boiling.

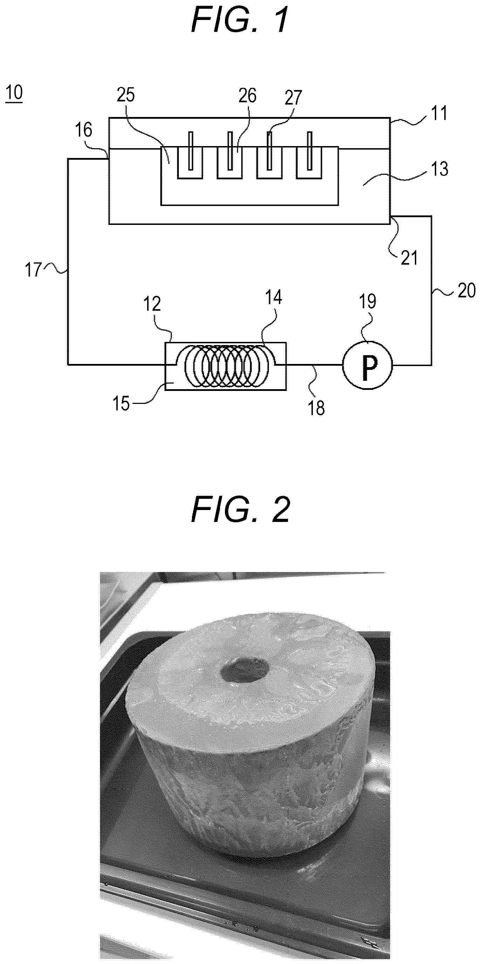

Then, the container was removed from the heat and cooled down to room temperature. Then, the gelatinous body was injected into a piping bag, and was injected into a metallic popsicle mold (with a volume of 30 cc, for example) with a cylindrical internal shape. Next, a green bamboo holding stick, frozen and stored, was inserted into the gelatinous body inside the popsicle mold. The popsicle mold into which the gelatinous body had been injected was placed in a refrigerator illustrated in FIG. 1, to be frozen by fast freezing. The gelatinous body after being frozen was taken out from the popsicle mold, as a popsicle that is an ice confection according to Experimental Example 1.

The popsicle having a cylindrical shape features uniform temperature conductivity when frozen, which is likely to lead to a texture with unique thickness. The popsicle also features uniform temperature conductivity at room temperature, and thus is less likely to drip. The popsicle with the size described above (approximately 30 cc) is handy, whereby an easy-to-eat ice confection can be obtained.

The ice confection may have a substantially rectangular parallelepiped shape resembling Japanese confections such as Yokan and Uiro. Such an ice confection can be eaten like the Japanese confections such as Yokan and Uiro. The ice confection may be a substantially rectangular parallelepiped, substantially cylindrical, substantially spherical, or substantially hemispherical bite-sized ice confection. Also in this case, an easy-to-eat ice confection can be obtained. For example, the ice confection may have a cubic shape so as to be an easy-to-eat ice confection with an attractive appearance.

In the present invention, the green bamboo stick is frozen and stored together with the ice confection and thus can be maintained to have fresh green color, without oxidizing to be whitened as in a case of green bamboo stored at room temperature after being cut. The green bamboo stick of the popsicle not being whitened proves that the popsicle has not been kept at room temperature.

The refrigerator 10 used in this example includes a rectangular container 11 and a heat exchanger 12 as illustrated in FIG. 1. The rectangular container 11 incorporates a refrigerant 13. Liquefied nitrogen 15 is introduced into the heat exchanger 12 incorporating copper conduit 14 that is wound into a coil, and thus cools the refrigerant flowing in the copper conduit 14. The rectangular container 11 has an output end 16 connected to an end portion of the copper conduit 14 on one end through a conduit 17. The copper conduit 14 has an end portion on the other side connected to an inlet end 21 of the rectangular container 11 through a conduit 18, a circulation pump 19, and a conduit 20.

FIG. 1 illustrates gelatinous bodies 26 injected into a popsicle mold 25 and holding sticks 27 inserted into the gelatinous bodies 26. An upper side of the rectangular container 11 can be opened and sealed as appropriate. The refrigerant used in this example is alcohol (ethyl alcohol).

With this configuration, the refrigerant 13 in the rectangular container 11 enters the copper conduit 14 in the heat exchanger 12 from the output end 16 through the conduit 17, to be cooled by the liquefied nitrogen 15 to a temperature at or lower than -30°C. Then, the refrigerant 13 is circulated back into the rectangular container 11 through the conduit 18, the circulation pump 19, the conduit 20, and the inlet end 21 of the rectangular container 11. In this process, the refrigerant 13 in the rectangular container 11 is maintained to be at a temperature at or lower than -27.5°C. Thus, the gelatinous body 26 injected into the popsicle mold 25 is rapidly cooled, so that the freezing can be completed within approximately five minutes.

The popsicle mold 25 was removed from the rectangular container 11 and was dipped in water. The temperature difference involved in this process partially melted the surface of the ice confection. Thus, the ice confection was able to be taken out from the popsicle mold 25 with the holding stick 27 held. The ice confection thus taken out was packaged by an automatic packaging apparatus (not illustrated). Thus, the ice confection in a popsicle form packaged in a bag according to Experimental Example 1 was obtained.

An ice confection in a popsicle form packaged in a bag according to Experimental Example 2 was obtained in a manner that is the same as that in Experimental Example 1, except that 6 parts by mass of kudzu starch and 6 parts by mass of lotus root powder serving as starch gellants, and a proper amount of wasanbon serving as a sweetener were added into 100 parts by mass of water. An ice confection in a popsicle form packaged in a bag according to Experimental Example 3 was obtained in a manner that is the same as that in Experimental Example 1, except that 6 parts by mass of kudzu starch, 3 parts by mass of lotus root powder, and 3 parts by mass of rice flour serving as starch gellants were added into 100 parts by mass of water. An ice confection in a popsicle form packaged in a bag according to Experimental Example 4 was obtained in a manner that is the same as that in Experimental Example 1, except that 11 parts by mass of kudzu starch and a proper amount of wasanbon were added into 100 parts by mass of water.

The ice confections in a form of popsicles in bags according to Experimental Examples 1 to 4 thus prepared were rested in a commercial refrigerator for ice confection sellers and the like available on the market maintained at -27.5°C for a predetermined period of time, to be at the same temperature. Then, a texture test was performed on the ice confections, the result of which is listed in Table 1 together with their compositions.

**[Table 1]**

| | Starch gellant | | | Texture | | | |
|---|---|---|---|---|---|---|---|
| | Kudzu starch | Lotus root powder | Rice flour | Chewiness | Thickness | Stickiness | Crispiness |
| Experimental Example 1 | 3 parts by mass | 8 parts by mass | - | ○ | × | × | × |
| Experimental Example 2 | 6 parts by mass | 6 parts by mass | - | ○ | ○ | × | × |
| Experimental Example 3 | 6 parts by mass | 3 parts by mass | 3 parts by mass | Δ | ○ | ○ | × |
| Experimental Example 4 | 11 parts by mass | - | - | × | ○ | × | ○ |

| | | | | | | | |
|---|---|---|---|---|---|---|---|
| Note: 100 parts by mass of water and a proper amount of wasanbon were used. | | | | | | | |

The results of Experimental Examples 1 to 4 reveal the following facts. The ice confection according to Experimental Example 1 had strong chewiness (○) but was too hard to eat as it was. On the other hand, the ice confection according to Experimental Example 2 not only had chewiness (○) but also had thickness (○), and was also easy to bite and eat. The ice confection according to Experimental Example 3 had stickiness (○) and thickness (○), and also had a certain level of chewiness (Δ). The ice confection according to Experimental Example 4 had crispiness (○) and also exhibited thickness (○) when melting in the mouth. These experimental examples indicate the following facts. Specifically, kudzu starch itself offers a feeling that thickness remains when the confectionery melts in the mouth, in the wake of the crispiness felt when the ice confection starts to be eaten. Addition of the lotus root powder leads to increased chewiness resulting in hardness. Addition of the rice flour results in increased stickiness.

As the starch gellant, in addition to kudzu starch, bracken starch alone may be added or bracken starch may be added to kudzu starch in addition to lotus root powder and rice flour. Addition of bracken starch can increase the crispiness.

The results described above indicate that if kudzu starch serving as a starch gellant is contained at the largest proportion in an ice confection, in other words, if an ice confection including kudzu starch as the main ingredient, a preferable ice confection can be obtained. The proportions of the lotus root powder, the rice flour, and the kudzu powder to be added may be determined as appropriate based on which one of the chewiness, the stickiness, and the crispiness is to be prioritized. Thus, the proportions of the lotus root powder, the rice flour, and the bracken starch to be added are adjustable as appropriate, as long as the kudzu starch is the main ingredient. For example, various compositions including the following may be implemented:
- kudzu starch: 100%
- kudzu starch: 50%, lotus root powder: 50%
- kudzu starch: 50%, lotus root powder: 25%, rice flour: 25%
- kudzu starch: 40%, rice flour: 30%, bracken starch: 30% In addition to the above, the ice confections in a popsicle form according to Experimental Examples 1 to 4 were each taken out of the bag and placed on a plate, to see how they melt. None of them dripped or collapsed. The chewiness and the thickness offered by such an ice confection are a unique texture different from textures of normal popsicles. We believe that this effect was obtained as a result of chewiness and thickness maintained due to the fact that the ice confection melted in the mouth without liquefying.

The texture of the ice confection according to each of Experimental Examples 1 to 4 after melting was compared with that felt by eating the gelatinous body which is a state thereof before the freezing. As a result, it has been found that the ice confection according to Experimental Example 1 was quite harder than the pre-frozen state, whereas the ice confections according to Experimental Examples 2 to 4 were only slightly harder. This indicates that kudzu starch serving as a starch gellant is particularly less likely to deteriorate, compared with lotus root powder and rice flour. The ice confections according to Experimental Examples 2 and 3 were at the best condition to eat immediately after they were made (approximately -27°C) (a good taste, a good texture, and the like). The ice confection according to Experimental Example 4 was at the best condition to eat after it has been stored in a refrigerator at approximately -13°C.

In Experimental Examples 1 to 4, wasanbon was used as the sweetener. However, the present invention is not limited to this. For example, unrefined sweeteners such as agave syrup, brown sugar, maple syrup, starch syrup, and coconut sugar may be used. Starch syrup is a component similar to rice flour in that it provides stickiness. Thus, the starch syrup may be added as the sweetener with the amount of rice flour to be added partially reduced or zeroed. In this case, similar stickiness can be obtained. The starch syrup may also be added without changing the amount of rice flour added. Thus, the stickiness can be adjusted.

[Experimental Examples 5 to 10] In Experimental Examples 5 to 10, six types of ice confections in a popsicle form were prepared under the same conditions as those in Experimental Example 3 except that a proper amount of flavoring material was added to the gelatinous body in Experimental Example 3. Specifically, the flavoring material was matcha (Experimental Example 5), roasted green tea (Experimental Example 6), Japanese cinnamon (Experimental Example 7), framboise juice (Experimental Example 8), persimmon juice (Experimental Example 9), and fermented rice drink (Experimental Example 10). Note that in Experimental Examples 5 to 10, the amount of water is preferably adjusted as appropriate, because these flavoring materials contain water.

Each of matcha, roasted green tea, and Japanese cinnamon was prepared by pouring hot water on its raw material. The framboise juice and persimmon juice were each squeezed from raw fruits using a juicer, and these squeezed juices were used as they were. The fermented rice drink was made from malted rice. Textures and tastes of the six types of ice confections in a popsicle form thus prepared were evaluated. The results are described below. Puree or paste (see Experimental Example 19 described later) may be used instead of the juice. When puree or paste is used, dipping or collapsing is even less likely to occur.

Ice confections according to Experimental Examples 5 to 7, using matcha, roasted green tea, and Japanese cinnamon, had substantially the same taste and texture as that according to Experimental Example 3, and only difference was that they each tasted like matcha, roasted green tea, or Japanese cinnamon in room temperature state immediately after the preparation, in a state of being the ice confection, and in a state where the ice confection was thawed. Ice confections according to Experimental Examples 8 to 10 using framboise juice, persimmon juice, and fermented rice drink respectively tasted like framboise, persimmon, and fermented rice drink. Furthermore, they each had slight crispiness, and exhibited thickness and stickiness as they melt. When thawed by being left at room temperature, these ice confections according to Experimental Examples 5 to 10 exhibited unique thickness while being harder than their state immediately after the preparation and almost did not drip at all. The starch gellant as in Experimental Example 3 was used for these examples. However, the present invention is not limited to this, and the starch gellant as in Experimental Example 2 or Experimental Example 4 may be used. Thus, the proportions of the lotus root powder, the rice flour, and the bracken starch to be added can be adjusted as appropriate, as long as the kudzu starch is the main ingredient.

**[Table 2]**

| | Starch gellant | | | Flavoring material | Texture | | | |
|---|---|---|---|---|---|---|---|---|
| | Kudzu starch | Lotus root powder | Rice flour | | Chewiness | Thickness | Stickiness | Crispiness |
| Experimental Example 3 | 6 parts by mass | 3 parts by mass | 3 parts by mass | Not added | Δ | ○ | ○ | × |
| Experimental Example 5 | 6 parts by mass | 3 parts by mass | 3 parts by mass | Matcha | Δ | ○ | ○ | × |
| Experimental Example 6 | 6 parts by mass | 3 parts by mass | 3 parts by mass | Roasted green tea | Δ | ○ | ○ | × |
| Experimental Example 7 | 6 parts by mass | 3 parts by mass | 3 parts by mass | Japanese cinnamon | Δ | ○ | ○ | × |
| Experimental Example 8 | 6 parts by mass | 3 parts by mass | 3 parts by mass | Framboise* | × | ○ | ○ | Δ |
| Experimental Example 9 | 6 parts by mass | 3 parts by mass | 3 parts by mass | Persimmon | × | ○ | ○ | Δ |
| Experimental Example 10 | 6 parts by mass | 3 parts by mass | 3 parts by mass | Fermented rice drink | × | ○ | ○ | Δ |

| | | | | | | | | |
|---|---|---|---|---|---|---|---|---|
| Note: 100 parts by mass of water and a proper amount of wasanbon were used. The amount of water was adjusted as appropriate for Experimental Examples 5 to 10. *: raspberry | | | | | | | | |

In Experimental Examples 5 to 10, matcha, roasted green tea, Japanese cinnamon, framboise juice, persimmon juice, and fermented rice drink were added. Note that other additives may be added including: teas such as green tea, English tea, and oolong tea; fresh juice of various fruits such as strawberry, grapefruit, mandarin orange, peach, apple, cherry, plum, melon, pear, Japanese pear, banana, kiwi, blackberry, cranberry, or cassis (including those in a puree or paste form); fresh vegetable juice (including those in a puree or paste form); and grain puree or paste (such as rice puree or brown rice puree, for example), as well as fermented rice drink, cinnamon, nuts, chocolate, coffee, rice milk, coconut water, coconut milk, coconut sugar, honey, liquor, sake, fermented rice drink, or a combination of these. In addition to these flavoring material added to the gelatinous body, flavoring powder (such as a material for adjusting the flavors of ice confections) may further be added.

Amongst the flavoring materials, the coconut water and coconut milk may be added to smoothen the taste. The coconut sugar can also be used as a sweetener featuring low GI and is full of various nutrients. There have been various reports on good effects of coconut on health. Thus, coconut not only offers a better taste and texture, but also offers various abundant nutrients. Amongst the flavoring material, honey, sake, or fermented rice drink are also usable as the sweetener. For example, an ice confection including agave, honey, and coconut sugar has a great taste. For example, sake can be used as a sweetener for an ice confection including alcohol.

[Experimental Example 11] A total of 10 ice confections in a popsicle form were prepared in a manner similar to those for preparing the ice confections according to Experimental Examples 1 to 10, except that a pair of electrodes (not illustrated) were provided on both side surfaces of the popsicle mold 25 in the rectangular container 11 and high frequency electrical field of 50 kHz was applied between these pair of electrodes. The total of 10 ice confections in a popsicle form according to Experimental Example 11 thus obtained were directly eaten, and were found to have more flavor as well as smooth and mild tastes, compared with the corresponding ice confections according to Experimental Examples 1 to 10.

It is presumed that the more flavor as well as the smooth and mild tastes were obtained with the application of the high frequency electrical field to the gelatinous body in the freezing process leading to vibrations of molecules constituting the gelatinous body, resulting in a change in taste. In Experimental Example 11, a high frequency of 50 kHz was used for the high frequency electrical field. Note that any frequency within a long wavelength range equal to or less than 150 kHz can increase absorption of high frequencies in the gelatinous body in the freezing process, resulting in minute vibrations of the molecules constituting the gelatinous body, so that predetermined effects based on the minute vibrations can be obtained.

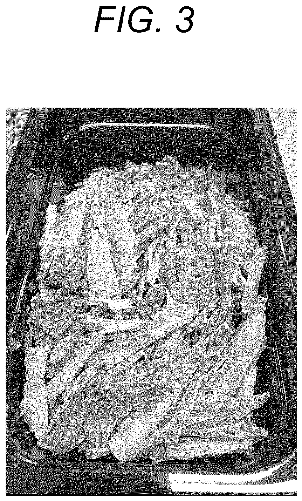

[Experimental Example 12] In Experimental Example 12, a cylindrical ice confection was prepared with Japanese cinnamon in Experimental Example 7 added, and in a manner similar to that in Experimental Example 7 except that the ice confection was prepared to have a cylindrical form with a size similar to those used for ice shavers. The cylindrical ice confection according to Experimental Example 12 was sliced using a commercial ice shaver with an angle of the blade adjusted, whereby an ice confection in a sliced form was prepared. Upon entering the mouth, this ice confection in a sliced form provided a Japanese cinnamon taste and a yatsuhashi-like flavor, as well as stickiness and thickness providing a unique texture different from normal popsicles. It is presumed that this was achieved with the ice confection melted in the mouth while maintaining stickiness and thickness, without liquefying. FIG. 2 is a perspective view of the cylindrical ice confection produced in Experimental Example 12. FIG. 3 is a perspective view illustrating the ice confection cut into a plate form.

As a result of being put in a container and left at room temperature, the frozen mochi-like food product in a sliced form turned into a mochi-like food product in a sliced form that is in a thawed state but maintaining the chewiness without melting. The mochi-like food product in a sliced form was also able to be eaten with a spoon and thus was easy to eat. Although the ice confection has a cylindrical form in this example, a rectangular parallelepiped shape, a rectangular columnar shape, or the like may be employed.

The ice confection to be shaved having a rectangular parallelepiped or cylindrical shape is formed to have a size suitable for an ice shaver. FIG. 2 illustrates an example where a cylindrical ice confection with a relatively large size is used. However, the present invention is not limited to this. For example, an ice confection may be in an elongated bar form (cylindrical or rectangular columnar shape) or in a small (bite size) rock or cube form. The ice confection in an elongated bar form may be divided into ice confections with a rock or cube form. In such a case, the ice confection in an elongated bar form may be notched to be easily divided along the notch to be the ice confections with a rock or cube form. Such an ice confection requires no holding stick, but can also be provided with a holding stick while being dividable into ice confections with a rock or cube form. Even without the notch, the ice confection in a bar form can be easily divided into pieces using a knife, fork, or spoon for example, or even by bare hands. The ice confection in a bar form and the ice confections with a rock or cube form have a relatively small size and thus a compact ice shaver can be used. Examples of such a compact ice shaver include a manual or electrical ice shaver for household or commercial use, and a manual or electrical handy ice shaver. In particular, when the handy electrical ice shaver is used, shaved ice can be easily made in homes and shops. For example, the shaved ice obtained by the ice shaver can be directly used as a topping on food such as pancakes and waffles.

For example, with an ice confection in an elongated bar form (cylindrical or rectangular columnar shape) or ice confections in a small (bite size) rock or cube form, shaved ice can be made with a plurality of types of ice confections put in and mixed in the ice shaver. In such a case, tastes of a plurality of types of ice confections can be freely combined, whereby various combinations among tastes can be implemented. For example, a combination can be freely decided such as a combination among tastes of chocolate, matcha, and strawberry. Furthermore, for example, in a case of the ice confections in a rock or cube form, the tastes of chocolate and strawberry can be combined with the following patterns: two ice confections with the chocolate taste and two ice confections with the strawberry taste; and three ice confections with the chocolate taste and one ice confection with the strawberry taste. Thus, the taste can be adjusted in accordance with what a customer likes. Thus, seasoning can be implemented with elaborated combinations and proportions of the tastes, whereby various different tastes different from an ice confection of a singular form with a single taste can be achieved.

With a dedicated ice shaver that can shave an ice confection with a holding stick, shaved ice can be made by simply putting the ice confection with a holding stick into the dedicated ice shaver. For example, the dedicated ice shaver may be obtained by replacing an attachment serving as a shaving blade of the handy ice shaver with an attachment with a hole through which a portion of the holding stick can pass, so that the ice confection with a holding stick can be directly shaved. The replacement of the attachment serving as the shaving blade is not limited to the handy device and may be applied to various types of manual or electrical ice shavers.

When the frozen mochi-like food product in a sliced form according to Experimental Example 12 frozen again in a low-temperature refrigerator is put in the mouth, the following three types of textures can be enjoyed:
(1) a crispy rice cracker-like texture that gives hard crunchiness;
(2) a texture softening in the mouth; and
(3) a texture providing unique thickness as the confectionary dissolves in about three seconds in the mouth.

Furthermore, flavor adding powder with various flavors may be sprinkled on the shaved ice, so that a taste with a richer flavor can be felt. The flavoring material and the flavor adding powder can be freely combined. Thus, an ice confection with a richer flavor can be obtained by a synergy between the flavoring material and the flavor adding powder combined.

Furthermore, the cylindrical ice confection according to Experimental Example 12 described above was prepared in a manner similar to that in Experimental Example 7. However, this should not be limiting sense. As described above, the flavoring material to be added to the ice confection may be selected as appropriate as described above. The starch gellant may be those in Experimental Examples 2 to 4 for example, and the proportions of the lotus root powder, rice flour, and bracken starch to be added can be adjusted as appropriate, as long as the kudzu starch is the main ingredient.

[Experimental Example 13] In Experimental Example 13, an ice confection provided with flavors was prepared with powder of various flavors added to the popsicle produced in Experimental Example 3. Preferably, the powder is fine enough to penetrate into the popsicle from the surface of the popsicle, after being sprinkled on the popsicle (however this should not be construed in a limiting sense). The popsicle produced in Experimental Example 3 had the sweetness of wasanbon, but had no other flavor added. For example, by sprinkling powder with a matcha flavor on this popsicle with the sweetness of wasanbon, a popsicle with the matcha flavor was able to be prepared with the powder penetrating into the popsicle.

By sprinkling powder with a plurality of flavors instead of a single flavor on a single popsicle with the sweetness of wasanbon, a popsicle with a plurality of flavors was able to be prepared. In such a case, with areas, each sprinkled with powder with a corresponding one of the flavors, partitioned from each other with means such as stencil, a popsicle with a colorful pattern and a plurality of flavors was able to be easily prepared. For example, a popsicle with three types of flavors including a matcha flavor, a roasted green tea flavor, and a yatsuhashi flavor (Japanese cinnamon flavor) was able to be easily prepared.

A process of sprinkling various types of powder having various flavors on a sweet popsicle can be performed extremely easily and within a short period of time. Thus, the process is not limited to factories, and can be performed in shops. For example, in a shop, after receiving an order from a customer, powder with a flavor he or she likes may be sprinkled on a sweet popsicle, so that a custom-made popsicle can be easily prepared on site.

Examples of various flavors of the powder, which is not particularly limited, include matcha flavor, roasted green tea flavor, yatsuhashi flavor (Japanese cinnamon flavor), cinnamon flavor, coffee flavor, framboise flavor, cranberry flavor, citrus depressa flavor, and any combination of these. The sweetener for the popsicle is not limited to wasanbon, and may be a sweetener including agave syrup, brown sugar, maple syrup, starch syrup, and coconut sugar. Furthermore, the types of the powder and the sweetener to be combined can be freely selected. In this example as well, the starch gellant may be those in Experimental Examples 2 to 4 for example, and the proportions of the lotus root powder, rice flour, and bracken starch to be added can be adjusted as appropriate, as long as the kudzu starch is the main ingredient.

[Experimental Example 14] In Experimental Example 14, the popsicles produced in Experimental Examples 5 to 10 with a matcha flavor (Experimental Example 5), a roasted green tea flavor (Experimental Example 6), a Japanese cinnamon flavor (Experimental Example 7), a framboise flavor (Experimental Example 8), a persimmon juice flavor (Experimental Example 9), and a fermented rice drink flavor(Experimental Example 10), and various types of powder with various flavors and a size fine enough to penetrate into the popsicles (note that the fineness of the powder is not limited to this) used in Example 13 were prepared. Then, the popsicles sprinkled with the powder were eaten. The powder was prepared to be contained in a container of an appropriate size. The container may have any size and shape as long as the powder in the container can be sprinkled onto the popsicle. The flavor of the popsicle and the flavor of the powder can be freely combined. Various combinations may be implemented examples of which including: matcha flavor powder on a matcha flavor popsicle; roasted green tea flavor powder on a roasted green tea flavor popsicle; and coffee flavor powder on a yatsuhashi (Japanese cinnamon) flavor popsicle. For example, the matcha flavor popsicle sprinkled with the matcha flavor powder was able to be eaten as a popsicle with richer matcha flavor than the matcha flavor popsicle eaten as it was. For example, a yatsuhashi (Japanese cinnamon) flavor popsicle sprinkled with coffee flavor powder was able to be eaten as a popsicle with a richer flavor due to a synergy between the Japanese cinnamon flavor and the coffee flavor.

When the lotus root powder is added as the starch gellant, chewiness increases so that a unique texture can be obtained. However, the flavor of the material added to the popsicle may become slightly vague depending on the amount of the lotus root powder added. Also in such a case, the popsicle can be sprinkled with powder and eaten, to have flavor corresponding to the powder boosted so that the flavor of the popsicle stands out more. The starch gellant may be those in Experimental Examples 2 to 4 for example, and the proportions of the lotus root powder, rice flour, and bracken starch to be added can be adjusted as appropriate, as long as the kudzu starch is the main ingredient.

A set of the popsicle and powder in a container according to Example 14 can be provided by a mobile shop. According to the food sanitation act, a shop that processes food needs to have predetermined equipment such as a two-layer sink. However, an act of providing a set of popsicle and powder in a container itself does not count as the processing of the popsicle. Thus, a simple mobile shop can provide a popsicle and powder in a container. For example, a set of popsicle and powder in a container can be sold by a simple mobile shop which is a bicycle provided with a bicycle-drawn car to be equipped with a cooler box. For example, the bicycle-drawn car can accommodate approximately 500 popsicles, the maximum weight of which is about 20 to 30 kg. Thus, a set of popsicle and powder in a container can be easily conveyed using a bicycle, but is preferably conveyed using an electric bicycle so that a load on a vender compared with a case where the bicycle drawn cart is manually towed. A customer who has bought a set of popsicle and powder in a container from a mobile shop can sprinkle the powder on the popsicle by him or herself to enjoy a popsicle with a richer flavor. If this popsicle is a cylindrical popsicle with a stick having a size of 30 cc, the popsicle can be conveniently eaten outdoor as a flavor-rich popsicle.

[Experimental Example 15] In Experimental Example 15, a popsicle maker kit enabling the popsicles according to Experimental Examples 5 to 10 to be made at home is provided. This maker kit includes
(1) a starch gellant with kudzu starch serving as the main ingredient,
(2) a sweetener,
(3) powder with various flavors, and
(4) a popsicle mold with a stick.

(1) The starch gellant described above is not limited to 100% kudzu starch, and may be obtained by mixing at least one of lotus root powder, rice flour, and bracken starch to kudzu starch as appropriate as in Experimental Examples 2 to 4. In other words, the proportions of the lotus root powder, rice flour, and bracken starch to be added can be adjusted as appropriate, as long as the kudzu starch is the main ingredient. (2) The sweetener described above may be selected as appropriate from unrefined sweeteners such as wasanbon, agave syrup, brown sugar, maple syrup, starch syrup, and coconut sugar. The sweetener used in the maker kit is preferably in a powder form. For example, wasanbon and brown sugar can be provided in a powder form.

Furthermore, agave powder is known as the agave syrup in a powder form.

The sweetener may be selected as appropriate in view of a combination with the flavors of (3) the powder described above. For example, wasanbon may be selected as Japanese flavor powder and agave powder may be selected a fruit flavor powder. There are various potential combinations between the sweetener and the powder, and thus a plurality of types of maker kits covering various combinations between tastes may be prepared. (3) The powder described above may include various types of powder with various flavors examples of which including matcha powder, roasted green tea powder, and Japanese cinnamon powder.

Furthermore, various types of powder with various flavors that is fine enough to penetrate into the popsicle, may be used as in Experimental Example 14. For example, when the matcha flavor powder is used as in Experimental Example 14, the powder to which water (hot water) is added immediately and uniformly dissolves in the water. Thus, anyone can prepare flavor-rich matcha, without the need for making the tea with a tea whisk. (4) The popsicle mold described above may be a resin mold for example, and is provided together with a stick for popsicles. The popsicle mold is presumed to enable a plurality of (about 6 to 12) popsicles to be prepared at once.

To make a popsicle at home using the maker kit, water (or warm water), a first container for mixing water (or warm water) with (1) to (3) described above, and a second container for adjusting (3) are prepared in addition to the maker kit. Next, how a popsicle is made at home using this maker kit will be described. First of all, (1) the starch gellant with kudzu starch serving as the main ingredient described above is and (2) the sweetener described above are added to a proper amount of water (warm water) in the first container. The resultant material is well mixed so that a base of the ice confection is prepared. The amount of this water is determined based on the volume of a single popsicle (30 cc for example).

Next, a small amount of water (or warm water) and one (or a plurality) of various types of (3) the flavor powder described above are put into the second container, and the resultant solution is stirred. Thus, a base of the flavor is prepared. The base of the flavor is added to the base of the ice confection made in the first container, and they are further mixed. The resultant mixture is poured into (4) the popsicle mold described above. These processes are repeated for other types of flavor powder. When the mixtures with all the flavors are poured into the popsicle mold, the popsicle mold is placed in a refrigerator so that the base of the ice confection is frozen. Once the base of the ice confection is well frozen, the popsicles with the sticks inserted are taken out from the popsicle mold, whereby the popsicles are completed.

[Experimental Example 16 to 20] In Experimental Example 16, the recipe was adjusted using the kudzu starch, whereby a chocolate ice confection not only having thickness, but also having favorable gumminess in a state of being the ice confection was made. The confection further offered a rich taste and texture like Nama-chocolate (Japanese ganache), and did not melt and drip even when it was left at room temperature. The raw material used contains kudzu starch and rice flour serving as the gellant, agave syrup used as the sweetener, commercial organic chocolate serving as the chocolate, and commercial rice milk, which is a nonallergenic ingredient, serving as a component replacing a lactic drink. The rice milk is obtained by performing enzyme saccharification on rice flour or rice bran so that starch is converted, and thus is known as a gluten free and non-allergic simulated lactic drink. Various types of rice milk are available on the market.

A mixture obtained by heating and mixing 100 parts by mass of rice milk, 5 parts by mass of kudzu starch, 2 parts by mass of rice flour, and a proper amount of commercial organic chocolate, as well as a proper amount of agave syrup were put into a pastelizer, to be heated and sterilized at 80 to 85°C for five minutes or more. Then, other processes were performed in the same manner as Experimental Examples 1 to 4, and thus a chocolate popsicle was obtained as the ice confection according to Experimental Example 16. Note that 5 parts by mass of kudzu starch and 2 parts by mass of rice flour may be dissolved in advance in a proper amount of water (or warm water) or rice milk. A pot may be used instead of the pastelizer. In such a case, the material is put in the pot, and the pot is heated to be maintained at 80 to 85°C for five minutes or more. The heating temperature for heating the pastelizer or pot may be 85 to 95°C. A higher temperature more facilitates melting of the starch gellant.

A chocolate popsicle that is an ice confection according to Experimental Example 17 was obtained in the same manner as Experimental Example 16 except that 8 parts by mass of kudzu starch was used as the starch gellant. A chocolate popsicle that is an ice confection according to Experimental Example 18 was obtained in the same manner as Experimental Example 16 except that a proper amount of starch syrup was used as the sweetener instead of agave syrup. A chocolate popsicle that is an ice confection according to Experimental Example 19 was obtained in the same manner as Experimental Example 17 except that coconut water and/or coconut milk was used instead of rice milk. A chocolate popsicle that is an ice confection according to Experimental Example 20 was obtained in the same manner as Experimental Example 17 except that coconut water and/or coconut milk was used instead of rice milk and a proper amount of coffee powder was added as the flavoring material in addition to chocolate. The texture and taste of the five types of chocolate popsicles thus prepared were evaluation. The results are as follows. In the following evaluation, gumminess, which is an evaluation standard for the state of ice confection, is a texture offering smoothness not quite on par with cream but with a subtle firmness.

**[Table 3]**

| | Starch gellant | | Rice milk | Coconut water and/or coconut milk | Flavoring material | Sweetener | Texture | | | | |
|---|---|---|---|---|---|---|---|---|---|---|---|
| | Kudzu starch | Rice flour | | | | | Chewiness | Thickness | Stickiness | Crispiness | Gummi |
| Experimental Example 16 | 5 parts by mass | 2 parts by mass | 100 parts by mass | - | Chocolate | Agave | Δ | ○ | ○ | × | ○ |
| Experimental Example 17 | 8 parts by mass | - | 100 parts by mass | - | Chocolate | Agave | × | ○ | × | ○ | × |
| Experimental Example 18 | 5 parts by mass | 2 parts by mass | 100 parts by mass | - | Chocolate | Starch syrup | Δ | ○ | ○ | × | ○ |
| Experimental Example 19 | 8 parts by mass | - | - | 100 parts by mass | Chocolate | Agave | × | ○ | × | ○ | × |
| Experimental Example 20 | 8 parts by mass | - | - | 100 parts by mass | Chocolate, coffee powder | Agave | × | ○ | × | ○ | × |

As described above, the chocolate popsicle according to Experimental Example 16 had a texture offering excellent thickness (○), good stickiness and gumminess (○), some chewiness (Δ), but not so much crispiness (×). Furthermore, the chocolate popsicle did not drip after being left for 30 minutes at room temperature. The chocolate popsicle according to Experimental Example 17 containing only kudzu starch as the starch gellant and not including rice flour had a texture offering good thickness (○), and compared with Experimental Example 16, fresher crispiness (○) but inferior chewiness (×), stickiness (×), and gumminess (×).The chocolate popsicle dripped when left at room temperature for 30 minutes.

The chocolate popsicle according to Experimental Example 18 using starch syrup as the sweetener instead of agave syrup had a texture offering excellent thickness (○), good stickiness (○) and gumminess (○), some chewiness (Δ), but not so much crispiness (×), as in the case of that according to Experimental Example 16. The stickiness and gumminess were stronger than those in Experimental Example 16. The chocolate popsicle did not drip even when it was left at room temperature for 30 minutes or more. This indicates that the starch syrup serving as the sweetener has an effect of providing stickiness and gumminess, as in the case of the rice flour. In Experimental Example 18, only starch syrup is used as the sweetener. However, the sweetener according to the present invention is not limited to this, and starch syrup may be used in addition to agave syrup for example. In such a case, the texture can be adjusted based on the amount of starch syrup.

The chocolate popsicles according to Experimental Example 19 and Experimental Example 20 using only kudzu starch as the starch gellant each had a texture similar to that in Experimental Example 17. Specifically, compared with Experimental Example 16, the texture offered fresher crispiness (○), good thickness (○), but inferior chewiness (×), stickiness (×), and gumminess (×). Furthermore, the chocolate popsicle dripped after being left at room temperature for approximately 30 minutes. Furthermore, coconut water and/or coconut milk may be added to achieve rich yet mild chocolate tastes.

The ice confections according to Experimental Examples 16 to 20 are prepared as chocolate popsicles (approximately 30 cc). Alternatively, the ice confections may have a rectangular parallelepiped shape (including a cube shape or a plate shape). Furthermore, the ice confections may have shapes similar to those of smaller chocolate confections with hemispherical or cubic (regular hexahedron or rectangular parallelepiped) shapes, to be easy to eat. In this example, only the commercial organic chocolate is used as the flavoring material. Note that alcohol that goes good with chocolate (unblended brandy or brandy powder) may be added at a concentration not exceeding 1%, so that an adult-orientated chocolate ice confection can be obtained. The alcohol concentration can be adjusted as appropriate. Furthermore, granular cashew nuts and/or hazel nuts as well as flesh of fruits (such as framboise, blackberry, cranberry, and orange puree) that go good with chocolate may be added, so that an extremely tasty ice confection can be obtained. Furthermore, a proper amount of brown sugar kompeito may be added.

Furthermore, grain puree (rice puree for example) may be added in addition to chocolate. The addition of rice puree results in an ice confection that is less likely to drip and has a softer texture, and also results in rich yet mild chocolate tastes. Not only rice puree but also brown rice puree and the like can be suitably used as the grain puree, but the grain puree is not particularly limited. In Experimental Examples 16 to 20, bracken starch alone may be added to kudzu starch serving as the gellant, or bracken starch may be added to kudzu starch in addition to lotus root powder and rice flour. In such a case, the proportions of lotus root powder, rice flour, and bracken starch to be added is lower than the proportion of the kudzu starch contained.

[Experimental Example 21] The chocolate ice confections according to Experimental Examples 16 to 20 offers substantially rich chocolate flavor. However, chocolate flavor could be very strong and rich so that some might call for a refreshing fruit flavor for aftertaste. Thus, in Experimental Example 21, an ice confection was prepared that offers two types of flavors by including: an ice confection with chocolate flavor having gumminess according to Experimental Example 16 occupying approximately 1/2 to 2/3 from the distal end; and an ice confection with a fruit flavor having crispiness occupying approximately 1/2 to 1/3 from the holding side.

The ice confection with chocolate flavor having gumminess was prepared in the same manner as Experimental Example 16, except for the process of injecting a material into the popsicle mold. Specifically, a material of the ice confection with the chocolate flavor, prepared in the pastelizer, was poured only by a 1/2 to 2/3 part from the distal end side of the popsicle mold, and only this chocolate ice confection portion was first frozen by the refrigerator. Next, a material of the ice confection with a fruit flavor (second aqueous solution described later), prepared with a method described later, was poured into the remaining 1/2 to 1/3 part of the popsicle mold in a state with the frozen chocolate ice confection formed on the distal end side, and then is frozen by the refrigerator. The resultant frozen object was taken out from the popsicle mold, as the popsicle with two types of flavors according to Experimental Example 21. More specifically, a popsicle including an ice confection with chocolate flavor having a gumminess occupying 1/2 to 2/3 from the distal end side and an ice confection with a fruit flavor having crispiness occupying 1/2 to 1/3 from the holding side was obtained.

This popsicle with two types of flavors not only has different tastes but also has different textures. The tastes include rich chocolate flavor on the distal end side and a refreshing fruit flavor (such as grapefruit, mandarin orange, or strawberry, for example) on the holding side. The ice confection with chocolate flavor on the distal end side had the same texture as Experimental Example 16 which offered excellent thickness, good stickiness and gumminess, some chewiness, but not so much crispiness. On the other hand, the ice confection with the fruit flavor on the holding side had crispiness, excellent unique thickness, but had no chewiness, stickiness, or gumminess. Neither of the ice confection with the chocolate flavor on the distal end side nor the ice confection with the fruit flavor on the holding side dripped after being left at room temperature for 30 minutes or more. In this example, the chocolate ice confection according to Experimental Example 16 was used as the ice confection with the chocolate flavor on the distal end side. Alternatively, the chocolate ice confection according to any one of Experimental Examples 17 to 20 may be used instead.

Next, a method of preparing a fruit flavor material for obtaining an ice confection with a fruit flavor on the holding side, with fresh flavor and a great texture and free of dripping, will be described.

First of all, puree or paste of fruits such as grapefruit, mandarin orange, or strawberry is prepared. Specifically, the fruit puree or paste is obtained through the following processes:
(1) cutting ingredients if the ingredients are larger than a prescribed size;
(2) performing heating and sterilizing for a predetermined period of time in a low oxygen state in a superheated steam atmosphere at a predetermined temperature; and
(3) processing the ingredients into a puree or paste form using any one of a planetary centrifugal mixer, a millstone grinder, and a rotary cutter, depending on the type of the ingredients or the state of the finished puree or paste. The content of the process (3) varies depending on the type and the state of the ingredients. Still, the planetary centrifugal mixer is preferably used for the fruit such as grapefruit, mandarin orange, and strawberry. The flavoring material is not limited to fruit, and may be grain such as peas and rice, nuts and seeds (such as pistachio and hazel nuts, for example), and vegetables for example. The millstone grinder is preferably used for grain such as peas and rice, and for nuts and seeds. The rotary cutter is preferably used for vegetables (leafy vegetables in particular).

In a first aqueous solution preparation process, 100% by mass of water, 11% by mass of kudzu starch, and a proper amount of agave syrup are put into a pastelizer, and the resultant material is heated at a temperature of 80°C to 85°C for five minutes or more for example to be sterilized. Thus, the first aqueous solution is prepared. In this process of preparing the first aqueous solution, juice may be further put into the pastelizer. Furthermore, if there is a material to be added to the ice confection (such as a material for adjusting the flavor of the ice confection), the material is put into the pastelizer in this first aqueous solution preparation process. For example, warm water at about 15°C to 70°C may be used instead of water. Furthermore, kudzu starch may be dissolved in water or warm water before being put into the pastelizer.

In Experimental Example 21 described above, only kudzu starch is used as the starch gellant. However, the present invention is not limited to this, and any one or more of lotus root powder, rice flour, and bracken starch may be mixed with kudzu starch, with a proportion of lotus root powder, rice flour, and/or bracken starch being smaller than the proportion of kudzu starch. In this example, the agave syrup is used as the sweetener. However, the present invention is not particularly limited to this. For example, non-refined sweeteners such as wasanbon, brown sugar, maple syrup, starch syrup, and coconut sugar may be used.

In a second aqueous solution preparation process, puree or paste of an ingredient processed by crushing was added to the first aqueous solution prepared by the first aqueous solution preparation process. Thus, a second aqueous solution is prepared. The puree or paste of the ingredient is fibrous, and the first container solution may have thickness. Thus, after the puree or paste of the ingredient has been added to the first aqueous solution, the puree or paste of the ingredient and the first aqueous solution are well stirred to be well mixed with each other. The puree or paste of the ingredient in this process has been heated and sterilized in the superheated steam sterilization process, and thus needs not to be heated and sterilized again. Thus, the ice confection that is less likely to drip can be obtained without compromising the flavor and color of the ingredient. According to the above description, if there is a material to be added to the ice confection (such as a material for adjusting the flavor of the ice confection), the material is put into the pastelizer in this first aqueous solution preparation process 14. Alternatively, the material may be added in the second aqueous solution preparation process.

In Experimental Example 21, the second aqueous solution was poured into the remaining 1/2 to 1/3 part of the popsicle mold in the state where the frozen chocolate ice confection is formed on the distal end side, and then was frozen in the refrigerator. The popsicle as a result of the freezing was taken out from the popsicle mold to be the popsicle with two types of flavors according to the Experimental Example 19.

In Experimental Example 21, the combination between the ice confection having chocolate flavor, prepared according to Experimental Examples 16 to 20, and the ice confection with the fruit flavor is described as the combination between two types of tastes. However, the present invention is not limited to this. For example, possible combinations for the popsicle with two types of flavors include a combination between the chocolate flavor and a matcha or roasted green tea flavor, a combination between chocolate flavor and coffee flavor, a combination between matcha or roasted green tea flavor and fruit flavor, and a combination between two types of fruit flavors. Furthermore, the number of types of tastes combined in the present invention is not limited to two. Three or more types of tastes may be combined, for example. For example, a combination among the chocolate flavor, the fruit flavor, and the matcha flavor, in this order from the distal end of a popsicle, may be implemented. Furthermore, the fruit flavor or vegetable flavor popsicle may be a popsicle with a single type of flavor, or a popsicle with other flavoring materials may be prepared.

[Experimental Example 22] In Experimental Example 22, shaved ice was prepared by shaving the ice confections according to Experimental Example 16 to 21. The cylindrical ice confection according to Experimental Example 22 was prepared in the same manner as Experimental Example 16 to 21 except that the ice confection was prepared to have a cylindrical shape and a size similar to that used for ice shavers. The cylindrical ice confection according to Experimental Example 22 was shaved and sliced using a commercial ice shaver with an angle of the blade adjusted, whereby an ice confection in a sliced form was prepared. When this ice confection in a sliced form was put in the mouth, a taste of the flavoring material, stickiness and thickness like Nama-chocolate as well as gumminess, and a unique texture different from normal popsicles were provided. It is presumed that this was achieved with the ice confection melted in the mouth maintaining gumminess as well as stickiness and thickness, without liquefying. FIG. 2 is a perspective view of the cylindrical ice confection produced in Experimental Example 20. FIG. 3 is a perspective view illustrating the ice confection cut into a plate form.

As a result of being put in a container and left at room temperature, the frozen mochi-like food product in a sliced form turned into a Nama-chocolate-like food product in a sliced form that is in a thawed state but maintaining the gumminess without melting. The Nama-chocolate-like food product in a sliced form was also able to be eaten with a spoon and thus was easy to eat. Although the ice confection has a cylindrical form in this example, a rectangular parallelepiped shape, a rectangular columnar shape, or the like may be employed.

The ice confection to be cut having a rectangular parallelepiped or cylindrical shape is formed to have a size suitable for an ice shaver. FIG. 2 illustrates an example where a cylindrical ice confection with a relatively large size is used. However, the present invention is not limited to this. For example, an ice confection may be in an elongated bar form (cylindrical or rectangular columnar shape) or in a small (bite size) rock or cube form. The ice confection in an elongated bar form may be divided into ice confections with a rock or cube form. In such a case, the ice confection in an elongated bar form may be notched to be easily divided along the notch to be the ice confections with a rock or cube form. Such an ice confection requires no holding stick, but can also be provided with a holding stick while being dividable into ice confections with a rock or cube form. Even without the notch, the ice confection in a bar form can be easily divided into pieces using a knife, fork, or spoon for example, or by bare hands. The ice confection in a bar form and the ice confections with a rock or cube form have a relatively small size and thus a compact ice shaver can be used. Examples of such a compact ice shaver include a manual or electrical ice shaver for household or commercial use, and a manual or electrical, handy ice shaver. In particular, when the handy electrical ice shaver is used, shaved ice can be easily made in homes and shops. For example, the shaved ice obtained by the ice shaver can be directly used as a topping on food such as pancakes and waffles.

with an ice confection in an elongated bar form (cylindrical or rectangular columnar shape) or ice confections in a small (bite size) rock or cube form, shaved ice can be made with a plurality of types of ice confections put in and mixed in the ice shaver at once. In such a case, tastes of a plurality of types of ice confections can be freely combined, whereby various combinations among tastes can be implemented. For example, a combination can be freely decided such as a combination among tastes of chocolate, strawberry, and grapefruit. When shaved ice is made by using ice confections with a chocolate taste and a coconut taste in a rock or cube form, for example, three ice confections with the chocolate taste and one ice confection with the coconut taste may be used, or two ice confections with the chocolate taste and two ice confections with the coconut taste may be used. Thus, the taste can be adjusted in accordance with what a customer likes. Thus, seasoning can be implemented with elaborated combinations and proportions of the tastes, whereby various different tastes different from an ice confection of a singular form with a single taste can be achieved.

With a dedicated ice shaver that can shave an ice confection with a holding stick, shaved ice can be made by simply putting the ice confection with a holding stick into the dedicated ice shaver. For example, the dedicated ice shaver may be obtained by replacing an attachment serving as a shaving blade of the handy ice shaver with an attachment with a hole through which a portion of the holding stick can pass, so that the ice confection with a holding stick can be directly shaved. The replacement of the attachment serving as the shaving blade is not limited to the handy device and may be applied to various types of manual or electrical ice shavers.

When the frozen mochi-like food product in a sliced form according to Experimental Example 22 frozen again in a low-temperature refrigerator is put in the mouth, the following three types of textures can be enjoyed:
(1) a crispy rice cracker-like texture that gives hard crunchiness;
(2) a texture softening in the mouth; and
(3) a texture providing unique gumminess like Nama-chocolate as the confectionary dissolves in about three seconds in the mouth.

Furthermore, flavor adding powder with various flavors may be sprinkled on the shaved ice, so that a taste with a richer flavor can be felt. The flavoring material and the flavor adding powder can be freely combined. Thus, an ice confection with a richer flavor can be obtained by a synergy between the flavoring material and the flavor adding powder combined.

[Experimental Example 23] Wafers may be provided on the outer sides of the ice confection according to Experimental Examples 1 to 22, so that an ice confection with wafers on the outer sides can be obtained. The ice confection is sandwiched by wafers, for example. Specifically, a pair of wafers each having a half cylinder shape cover the surfaces of the cylindrical ice confection. The ice confection with wafers on the outer side is of a great design providing an appearance of Japanese confections. Furthermore, a tasty ice confection with a good texture can be obtained with a synergy between a crisp texture of the wafers and the unique thickness obtained by using the kudzu starch. When the ice confection is eaten, the first thing that comes into contact with the mouth is the wafers, meaning that the chilliness of the ice confection is not directly conveyed to the mouth. Thus, unique chilliness can be obtained, which would be felt when eating a chilled Japanese confection and is not offered by conventional ice confections.

The shape of the ice confection is not limited to a cylindrical shape, and may be a rectangular columnar shape. The wafer may have a shape conforming to that of the ice confection. For example, the ice confection may have a rectangular parallelepiped shape for example. The wafers may have any configuration as long as the ice confection can be covered, and thus rectangular parallelepiped wafers may be used for a cylindrical ice confection, for example. The wafer may have a size corresponding to the size of an ice confection for a single person. The wafer may have any shape such as a circular shape, an oval shape, a polygonal shape, a bowl shape, or a planer shape. The holding stick may or may not be provided. If the holding stick is not provided, the ice confection has a design similar to that of a wafer cake called monaka, which is a Japanese confection. If there is no holding stick, a wire shaped member may be inserted in the heated/mixed aqueous solution (such as the gelatinous body according to Experimental Example 1 and the second aqueous solution according to Experimental Example 21) in advance, so that the frozen ice confection can be easily taken out from the popsicle mold. The color of the wafer is not limited to light brown. The wafer may be colored with a natural ingredient to be white, red, or the like. Furthermore, a black wafer may be obtained by adding bamboo charcoal. Thus, an ice confection in a form of an ice wafer cake with excellent design in terms of shape, color, and the like can be provided.

The shaved ice confection according to Experimental Example 12 or Experimental Example 22 may be encased in wafers. Wafers may be used like a tableware instead of completely encasing the confection. The shaved ice confection may be encased by wafers to be an ice confection that has a great design, easy to eat, and offers a better texture and taste. The shaved ice confection may be served with the wafer serving as a tableware to offer various ways of eating including: eating only the ice confection using a spoon and the like; and eating the wafer and the ice confection at the same time. This leads to an increase in variations of the texture and taste.

[Second Embodiment] With Experimental Examples 1 to 23 described in the first embodiment, an example of recipes of various ice confections has been described. However, the recipe of the ice confection according to the present invention is not limited to these and can be adjusted as appropriate. In a second embodiment, examples of modifications of the recipe according to Experimental Examples described in the first embodiment will be described.

The proportion of the starch gellant may be increased or reduced from that in Experimental Examples 1 to 4. The increase in the proportion of the starch gellant leads to a higher level of gelation, resulting in the ice confection more effectively prevented from collapsing or dripping. However, an excessively high proportion of the starch gellant may lead to a texture that gives hard crunchiness. On the other hand, the reduction in the proportion of the starch gellant leads to a lower level of gelation resulting in a texture that gives softer crunchiness, but also tends compromise the effect of preventing the collapsing and dripping. The kudzu starch is expensive, and thus reduction of the amount of kudzu starch is advantageous in terms of cost.

In Experimental Example 4, 11 parts by mass of kudzu starch was added to 100 parts by mass of water. Alternatively, 0.3 part by mass of kudzu starch may be added to 100 parts by mass of water. Such a composition can provide an ice confection with a unique thickness due to kudzu starch, as well as a certain level of effect of preventing the collapsing and dripping. For example, the amount of starch gellant to 100 parts by mass of water may be 0.2 part by mass to 20 parts by mass. A larger amount of the starch gellant (2 parts by mass to 20 parts by mass for example) is likely to lead to a higher effect of preventing collapsing and dripping.

It has been described in Experimental Examples 5 to 10 that the amount of water is to be adjusted as appropriate when juice or the like is added. The amount of water may be small when juice and/or puree or paste with a large amount of water is added. Specifically, when the starch gellant is added, the starch gellant needs to be dissolved in water. Thus, water needs to be provided in the same amount as the starch gellant for example. On the other hand, if the proportion of the juice and/or puree or paste with a large amount of water is high, the amount of water can be smaller.

In Experimental Examples 2 to 4 described above, kudzu starch is provided as the main ingredient of the starch gellant. However, for example, a recipe with the amount of lotus root powder being larger than kudzu starch in Experimental Example 1 may be contemplated, if the texture or the effect of preventing collapsing or dripping is not an essential feature. Furthermore, examples of other possible recipes include that with 3 parts by mass of kudzu starch and 8 parts by mass of rice flour added to 100 parts by mass of water.

Experimental Example 21 described above provides an ice confection in a popsicle form including the chocolate ice confection formed on the distal end side and the ice confection with a fruit flavor formed on the holding side. Note that the ice confection may entirely be the ice confection with a fruit flavor. This ice confection with a fruit flavor may be prepared in a manner similar to that for preparing an ice confection according to Experimental Example 21 using puree or paste.

[Third Embodiment] The refrigerator 10 described in Experimental Example 1 uses alcohol as the coolant. However, the refrigerator is not limited to this aspect. In a third embodiment, an example is described where a refrigerator with which an ice confection contains air is used in a process of cooling the ice confection. The third embodiment is different from the first and the second embodiments in the cooling process using the refrigerator, but are the same as the first and the second embodiments in other processes for the production.

An aqueous solution as a result of heating/mixing (the gelatinous body according to Experimental Example 1 or the second aqueous solution according to Experimental Example 21) was stirred while being cooled using a known freezer for gelato or soft-serve ice cream such that an ice confection containing air can be obtained (a freezer for producing ice cream, gelato, sorbet, soft-serve ice cream, and the like can be used). The amount of air mixed in the ice confection is called overrun. The overrun of 100% indicates that a liter of air is contained in a liter of an aqueous solution. The overrun of a general ice cream is about 60 to 100%.

The overrun is adjustable based on the cooling temperature as well as the speed, time, and the like of stirring in the stirring/cooling process using the freezer for gelato or soft-serve ice cream, and also varies depending on the aqueous solution used. For example, the overrun can be adjusted between 0 to 200% for example, for an aqueous solution including: starch gellant with kudzu starch serving as the main ingredient; and fruit puree or paste. The overrun may be 60% to 200% for example, to achieve a unique airy texture. Examples of the unique airy texture of the ice confection, which is also adjustable based on the overrun, include a favorable texture between those of sorbet and ice cream and a favorable texture between those of soft-serve ice cream and gelato. The upper limit of the overrun, which is not particularly limited, is about 300% for example. A lower overrun results in unique stickiness standing out, due to starch gellant with the kudzu starch serving as the main ingredient, and a heavier taste, whereas a higher overrun results in a more airy texture and a lighter taste.

With kudzu starch used as the main ingredient of the starch gellant, the unique thickness due to kudzu starch is provided in addition to the unique airy texture, resulting in an even more preferable texture. Thus, an ice confection with a soft-serve ice cream-like texture can be provided without adding any milk component. The overrun can be easily increased by using the kudzu starch as the main ingredient of the starch gellant. The use of the fruit puree or paste as in Experimental Example 21 contributes to an increase in the overrun. Thus, a texture with unique airiness and thickness can be improved due to the favorable unique airy texture and the kudzu starch serving as the main ingredient of the starch gellant.

If the gellant contains only the kudzu starch, unique thickness can be provided in addition to a unique airy texture. For example, the gellant may be obtained by mixing at least one selected from lotus root powder, rice flour, and bracken starch with the kudzu starch. As a result, a texture with chewiness due to the lotus root powder and/or stickiness due to the rice flour in addition to the unique airy texture and the unique thickness can be felt. Furthermore, adding bracken starch can increase a gelato-like texture. Since lotus root powder, rice flour, and bracken starch are free of allergenicity, addition of these components would not compromise the allergenicity-free feature of kudzu starch. All things considered, an ice confection with a soft-serve ice cream like airy texture can be provided without adding any milk component.

As in Experimental Example 11, when a high frequency electrical field is applied by a pair of electrodes in the cooling process, the molecules constituting the gelatinous body vibrates to change the taste, increase the flavor, and smoothen the taste so that an ice confection with a mild taste can be obtained. The high frequency electrical field in a long wavelength range equal to or less than 150 kHz can increase absorption of high frequencies in the gelatinous body in the freezing process, resulting in favorable minute vibrations of the molecules constituting the gelatinous body. Thus, an ice confection with even a smoother taste can be obtained.

The ice confection obtained by stirring/cooling an aqueous solution in a freezer for gelato or soft-serve ice cream may be served in any desired form including a soft-serve ice cream form, a popsicle form, an ice cream cup form, a wafer ice cream form, and a shaved ice form. Thus, by changing how it is served, the ice confection served in various different forms can be produced by the same recipe and the same production process. Having an overrun of 60% or more, an ice confection can be served in a soft-serve ice cream form. The ice confection can be served in a popsicle form, through a process of injecting and cooling the ice confection in a mold. The ice confection can be served in a cup ice cream form, by freezing and storing a container containing the ice confection. The ice confection can be served in a wafer ice cream form with the ice confection sandwiched by wafers. The ice confection can be served in a shaved ice form, by shaving the frozen ice confection using an ice shaver. Thus, ice confections served in various different forms can be produced by the same recipe and the same production process.

A description is given on the ice confection in a soft-serve ice cream form. The ice confection immediately after being taken out from the freezer for gelato or soft-serve ice cream is in a soft-serve ice cream form because the overrun is 60% or more (the form is adjustable, based on the level of overrun, to be in an ice cream form, a soft-serve ice cream form, a gelato form, a sorbet form or the like. Here, for example, the ice confection is in a state of having a favorable texture between those of sorbet and ice cream or between soft-serve ice cream and gelato). The ice confection can be arranged on an ice cream cone or in a container, to be served in a form of soft-serve ice cream.

A description will be given on the ice confection in a popsicle form. The ice confection taken out from the freezer for gelato or soft-serve ice cream may be injected into a popsicle mold, and cooled by a refrigerator using alcohol as a refrigerant, for example. Thus, the ice confection can be served in a popsicle form.

A description is given on the ice confection in an ice cream cup form. The ice confection taken out from the freezer for gelato or soft-serve ice cream may be put into a container of an appropriate size, and the container may be frozen and stored in a refrigerator. If the container used has a large capacity (such as two liters or four liters, for example), the ice confection can be provided in a bulk form. In a shop, the ice confection can be scooped from the large capacity container using an ice disher and the like onto a small container, to be served as an ice confection in an ice cream cup form. The container containing the ice confection taken out from the freezer for gelato or soft-serve ice cream may be a paper or resin cup for a single person, to be servable as an ice cream cup with the container.

A description is given on the ice confection in a wafer ice cream form will be given. The ice confection taken out from the freezer for gelato or soft-serve ice cream, the ice confection frozen and stored, or the ice confection put in a popsicle mold and cooled to be solidified in a refrigerator using alcohol as the refrigerant for example may be sandwiched by wafers of an appropriate size and shape to be servable as the ice confection in a wafer ice cream form. The shape of the ice confection is not limited to a cylindrical shape, and may be a rectangular columnar shape. The wafer may have a shape conforming to that of the ice confection. For example, the ice confection may have a rectangular parallelepiped shape for example. The wafers may have any configuration as long as the ice confection can be covered, and thus rectangular parallelepiped wafers may be also used for a cylindrical ice confection, for example. An appropriate amount of the ice confection may be directly taken out from the freezer and sandwiched by the wafers. Alternatively, an ice confection frozen and stored may be scooped by an ice disher for example, and then sandwiched by the wafers.

The wafer may have a size corresponding to the size of an ice confection for a single person. The wafer may have any shape such as a circular shape, an oval shape, a polygonal shape, a bowl shape, or a planer shape. The holding stick may or may not be provided. If the holding stick is not provided, the ice confection has a design similar to that of a wafer cake called monaka, which is a Japanese confection. If there is no holding stick, a wire shaped member may be inserted in the heated/mixed aqueous solution (such as the gelatinous body according to Experimental Example 1 and the second aqueous solution according to Experimental Example 21) in advance, so that the frozen ice confection can be easily taken out from the popsicle mold. The color of the wafer is not limited to light brown. The wafer may be colored with a natural ingredient to be white, red, or the like. Furthermore, a black wafer may be obtained by adding bamboo charcoal. Thus, an ice confection in a form of an ice wafer cake with excellent design in terms of shape, color, and the like can be provided.

A description is given on the ice confection in a shaved ice form. The ice confection taken out from the freezer for gelato or soft-serve ice cream is soft. Thus, the ice confection is put in an appropriate container and cooled in a refrigerator using alcohol as the refrigerant for example, whereby the ice confection in a solid state can be obtained. The container may have a size large enough to be usable in a commercial ice shaver or the size of a popsicle. For example, the container may have an elongated bar shape (cylindrical or rectangular columnar shape), or a small (bite sized) rock or cube shape. As in Experimental Example 12 and Experimental Example 22, the ice confection may be shaved by an ice shaver to be servable as the ice confection in a shaved ice form. Furthermore, in the same manner as Experimental Example 12 and Experimental Example 22, by further refreezing the shaved ice confection, an ice confection with a different texture may be achieved.

Experimental Examples 1 to 23 of the first embodiment, the second embodiment, and the third embodiment are described above. These experimental examples and the embodiments can be combined as appropriate. In the description above, the starch gellant such as kudzu starch is dissolved in water. However, the present invention is not limited to this, and the starch gellant such as kudzu starch may be dissolved in rice milk, coconut water, coconut milk, or the like instead of water for example. In the experimental examples described above using kudzu starch as the main ingredient, the kudzu starch is used as the main ingredient of the starch gellant, for the sake of texture. If the texture does not need to be maintained, the kudzu starch is not necessarily the main ingredient of the starch gellant. In the above described example, kudzu starch, lotus root powder, rice flour, and bracken starch are used as the starch gellant for the sake of texture and for the sake of the allergenicity-free property. If these textures and the allergenicity-free property are not essential features, other types of gellant such as agar or gelatin may be used for example. In the experimental examples described above, an unrefined sweetener is used as the sweetener. However, if a GI value, minerals, a texture, and the like are not essential factors, other types of sweeteners such as refined sweeteners or synthetic sweeteners may be used, for example.

### Reference Signs List

- 10: refrigerator
- 11: container
- 12: heat exchanger
- 13: refrigerant
- 14: conduit
- 15: liquefied nitrogen
- 16: output end
- 17: conduit
- 18: conduit
- 19: circulation pump
- 20: conduit
- 21: inlet end
- 25: popsicle mold
- 26: gelatinous body
- 27: holding stick

## Claims

1. A food product comprising a gellant and a sweetener, wherein
the gellant contains kudzu starch as a main ingredient, but includes none of potato starch, sweet potato starch, corn starch, or wheat starch, and
the sweetener includes at least a material that is not refined, but includes none of refined sugar, glucose, or synthetic sweeteners.

2. The mochi-like food product according to claim 1, wherein the gellant contains only the kudzu starch, or includes the kudzu starch and at least one selected from lotus root powder, rice flour, and bracken starch mixed together.

3. The mochi-like food product according to claim 1 or 2, wherein a flavoring material is further added, the flavoring material including at least one or more of teas, Japanese cinnamon, cinnamon, fruit or vegetable juice, fruit or vegetable puree or paste, grain puree or paste, nuts, chocolate, coffee, rice milk, coconut water, coconut milk, coconut sugar, honey, liquor, sake, and fermented rice drink, and one or more of coconut sugar, honey, sake, and fermented rice drink in the flavoring material are also capable of serving as a sweetener.

4. The mochi-like food product according to any one of claims 1 to 3, comprising wafers on outer sides of the mochi-like food product.

5. An ice confection comprising a gellant and a sweetener, wherein
the gellant contains kudzu starch as a main ingredient, but includes none of potato starch, sweet potato starch, corn starch, or wheat starch, and
the sweetener includes at least a material that is not refined, but includes none of refined sugar, glucose, or synthetic sweeteners.

6. The ice confection according to claim 5, wherein the gellant contains only the kudzu starch, or includes the kudzu starch and at least one selected from lotus root powder, rice flour, and bracken starch mixed together.

7. The ice confection according to claim 5 or 6, wherein a flavoring material is further added, the flavoring material including at least one or more of teas, Japanese cinnamon, cinnamon, fruit or vegetable juice, fruit or vegetable puree or paste, grain puree or paste, nuts, chocolate, coffee, rice milk, coconut water, coconut milk, coconut sugar, honey, liquor, sake, and fermented rice drink, and one or more of coconut sugar, honey, sake, and fermented rice drink in the flavoring material are also capable of serving as a sweetener.

8. The ice confection according to claim 7, wherein the flavoring material includes chocolate and at least one of rice milk, coconut water, coconut milk, and coconut sugar.

9. An ice confection comprising two or more ice confections having different tastes or textures combined out of the ice confections according to any of claims 5 to 8 .

10. The ice confection according to any one of claims 5 to 9, wherein flavor adding powder is further added.

11. The ice confection according to any one of claims 5 to 10, wherein the ice confection has an overrun of 60% or more.

12. The ice confection according to claim 11, wherein the ice confection is provided in at least one form selected from a soft-serve ice cream form, a popsicle form, an ice cream cup form, a wafer ice cream form, and a shaved ice form.

13. The ice confection according to any one of claims 5 to 12, wherein the ice confection is shaved.

14. The ice confection according to claim 13, wherein a plurality of types of ice confections to which different flavoring materials are added are mixed.

15. The ice confection according to claim 13 or 14, wherein the ice confection is additionally cooled in a refrigerator.

16. The ice confection according to any one of claims 13 to 15, wherein flavor adding powder is added to the shaved ice confection.

17. The ice confection according to any one of claims 5 to 12, comprising a holding stick made of green bamboo.

18. The ice confection according to any one of claims 5 to 17, comprising wafers on outer sides of the ice confection.

19. An ice confection maker kit comprising materials and a utensil for producing the ice confection according to any one of claims 5 to 18, wherein
the ice confection maker kit includes at least a gellant containing the kudzu starch as the main ingredient, the sweetener, and a popsicle mold.

20. A production method for an ice confection, the production method comprising:
(1) a step of preparing an aqueous solution by dispersing a gellant and a sweetener in water, the gellant including kudzu starch as a main ingredient but including none of potato starch, sweet potato starch, corn starch, or wheat starch, the sweetener including at least a material that is not refined but including none of refined sugar, glucose, or synthetic sweeteners;
(2) a step of heating the aqueous solution while stirring the aqueous solution;
(3) a step of injecting the aqueous solution obtained in step (2) into a mold with a predetermined shape; and
(4) a step of refrigerating and freezing the gelatinous body injected in the mold, with a refrigerant circulating around the mold.

21. The production method for an ice confection according to claim 20, wherein in step (2), the aqueous solution is turned into gel.

22. The production method for an ice confection according to claim 20 or 21, wherein as the gellant, the kudzu starch alone is used, or the kudzu starch and at least one selected from lotus root powder, rice flour, and bracken starch are mixed together and used.

23. The production method for an ice confection according to any one of claims 20 to 22, wherein step (4) is performed while applying a high frequency electrical field to the aqueous solution in the mold.

24. The production method for an ice confection according to any one of claims 20 to 23, further comprising a step of mixing a flavoring material in the aqueous solution in step (2), the flavoring material including at least one or more of teas, Japanese cinnamon, cinnamon, fruit or vegetable juice, fruit or vegetable puree or paste, grain puree or paste, nuts, chocolate, coffee, rice milk, coconut water, coconut milk, coconut sugar, honey, liquor, sake, and fermented rice drink, wherein
one or more of coconut sugar, honey, sake, and fermented rice drink in the flavoring material are also capable of serving as a sweetener.

25. The production method for an ice confection according to claim 24, wherein the flavoring material includes chocolate and at least one of rice milk, coconut water, coconut milk, and coconut sugar.

26. The production method for an ice confection according to any one of claims 20 to 25, wherein two or more ice confections having different tastes or textures are combined, with steps (3) and (4) sequentially repeated for the number of times corresponding to the number of types of the ice confection obtained by the combination.

27. The production method for an ice confection according to any one of claims 20 to 26, wherein an ice confection includes an ice confection including chocolate serving as a flavoring material on a distal end side, and an ice confection including a fruit serving as the flavoring material on a holding stick side, first, steps (3) and (4) are performed on a gelatinous body including chocolate serving as a flavoring material, and then, steps (3) and (4) are performed on a gelatinous body including a fruit serving as a flavoring material.

28. The production method for an ice confection according to any one of claims 20 to 27, comprising, after step (3), a step of inserting a holding stick made of green bamboo in an aqueous solution injected in the mold.

29. The production method for an ice confection according to any one of claims 20 to 28, further comprising (5) a step of shaving the ice confection obtained in step (4).

30. The production method for an ice confection according to claim 29, wherein the shaved ice confection is any one of
(a) an elongated ice confection with a substantially cylindrical or substantially rectangular columnar shape, and with no holding stick,
(b) an elongated ice confection with a substantially cylindrical or substantially rectangular columnar shape, and with a holding stick,
(c) an ice confection in a rock or cube form, and
(d) ice confections in a rock or cube form obtained by splitting the ice confection (a) or (b).

31. The production method for an ice confection according to claim 30, wherein in (d), the elongated ice confection with a substantially cylindrical or substantially rectangular columnar shape in (a) or (b) is notched, and the ice confection is divided along the notch to be in a rock or cube form.

32. The production method for an ice confection according to any one of claims 29 to 31, wherein a manual or electrical ice shaver, or a manual or electrical, handy ice shaver are used for shaving the ice confection.

33. The production method for an ice confection according to claim 32, wherein an ice confection with a plurality of types of flavors combined is produced by putting a plurality of types of ice confections to which different flavoring materials are added in the ice shaver.

34. The production method for an ice confection according to any one of claims 29 to 33, further comprising (6) a step of additionally cooling the ice confection obtained in step (5) in a refrigerator.

35. A production method for an ice confection, the production method comprising:
(1) a step of preparing an aqueous solution by dispersing a gellant and a sweetener in water, the gellant including kudzu starch as a main ingredient but including none of potato starch, sweet potato starch, corn starch, or wheat starch, the sweetener including at least a material that is not refined but including none of refined sugar, glucose, or synthetic sweeteners;
(2) a step of heating the aqueous solution while stirring the aqueous solution; and
(3) a step of cooling the aqueous solution obtained in step (2) such that the aqueous solution contains air in a refrigerator.

36. The production method for an ice confection according to claim 35, wherein the aqueous solution is turned into gel in step (2).

37. The production method for an ice confection according to claim 35 or 36, wherein as the gellant, the kudzu starch alone is used, or the kudzu starch and at least one selected from lotus root powder, rice flour, and bracken starch are mixed and used.

38. The production method for an ice confection according to any one of claims 35 to 37, wherein step (3) is performed while applying a high frequency electrical field to the aqueous solution in the mold.

39. The production method for an ice confection according to any one of claims 35 to 38, further comprising a step of mixing a flavoring material in the aqueous solution in step (2), the flavoring material including at least one or more of teas, Japanese cinnamon, cinnamon, fruit or vegetable juice, fruit or vegetable puree or paste, grain puree or paste, nuts, chocolate, coffee, rice milk, coconut water, coconut milk, coconut sugar, honey, liquor, sake, and fermented rice drink, wherein
one or more of coconut sugar, honey, sake, and fermented rice drink in the flavoring material are also capable of serving as a sweetener.

40. The production method for an ice confection according to claim 39, wherein the flavoring material includes chocolate and at least one of rice milk, coconut water, coconut milk, and coconut sugar.

41. The production method for an ice confection according to any one of claims 35 to 40, wherein the ice confection has an overrun of 60% or more in step (3).

42. The production method for an ice confection according to any one of claims 35 to 41, wherein the ice confection obtained in step (3) is provided in at least one form selected from a soft-serve ice cream form, a popsicle form, an ice cream cup form, a wafer ice cream form, and a shaved ice form.

43. The production method for an ice confection according to any one of claims 20 to 42, wherein at least one type of flavor adding powder is further added, selected from a plurality of types.

44. The production method for an ice confection according to any one of claims 20 to 43, wherein wafers are provided on outer sides of the ice confection.
